# EUROPEAN PATENT SPECIFICATION

(11) **EP 3 846 627 B1**
(45) Date of publication and mention of the grant of the patent: **14.12.2022**
(21) Application number: 19772995.7
(22) Date of filing: 06.09.2019
(51) Int. Cl.: A01N 65/12, A01N 37/36, A01N 43/16, A01P 3/00

(54) **USE OF CHICORY EXTRACT AS A FUNGICIDE**
VERWENDUNG EINES ZICHORIENEXTRAKTS ALS FUNGIZID
UTILISATION D'UN EXTRAIT DE CHICORÉE EN TANT QUE FONGICIDE

(30) Priority: 07.09.2018 EP 18193242
(43) Date of publication of application: 14.07.2021
(73) Proprietor: Sensus B.V., 4704 RA Roosendaal (NL)
(72) Inventor: DE ROODE, Bartholomeus Mattheus, 3051 PT Rotterdam (NL); HANSE, Abraham Cornelis, 8303 JD Emmeloord (NL)
(74) Representative: Nederlandsch Octrooibureau
(86) International application number: PCT/EP2019/073893
(87) International publication number: WO 2020/049173

(56) References cited:
- WO-A1-2014/106251
- MARES D ET AL: "Chicory extracts from Cichorium intybus L. as potential antifungals", MYCOPATHOLOGIA, KLUWER ACADEMIC PUBLISHERS, DO, vol. 160, no. 1, 1 August 2005 (2005-08-01), pages 85-91, XP019259915, ISSN: 1573-0832 cited in the application
- Atanu Koner ET AL: "Original Article ISOLATION OF ANTIMICROBIAL COMPOUNDS FROM CHICORY (Cichorium intybus L.) ROOT", International Journal of Research in Pure and Applied Microbiology, 1 January 2011 (2011-01-01), pages 13-18, XP055376927, Retrieved from the Internet: URL:https://urpjournals.com/tocjnls/44_1s2 .pdf [retrieved on 2018-10-08]
- HANSE B ET AL: "Stemphyliumsp., the cause of yellow leaf spot disease in sugar beet (Beta vulgarisL.) in the Netherlands", EUROPEAN JOURNAL OF PLANT PATHOLOGY, SPRINGER NETHERLANDS, NL, vol. 142, no. 2, 4 March 2015 (2015-03-04) , pages 319-330, XP035493285, ISSN: 0929-1873, DOI: 10.1007/S10658-015-0617-8 [retrieved on 2015-03-04] cited in the application

## Description

### FIELD OF THE INVENTION

The invention relates to the field of fungicides for use on crops. More particularly, the invention relates to the use of a fungicide that is effective against *Stemphylium beticola* and against *Cercospora beticola* on crops such as sugar beet and potato. The invention further relates to a process for preventing and/or controlling fungal infestations of crops with pathogen of the genus *Stemphylium beticola* and *Cercospora beticola* comprising the treatment with aforementioned fungicide.

### BACKGROUND OF THE INVENTION

In the summer of 2007, yellow leaf spots were observed for the first time on sugar beet plants in The Netherlands. Since then, every year infestation of sugar beet fields were reported and samples were sent to the diagnostic service of the IRS (Institute of Sugar beet Research, Bergen op Zoom, The Netherlands). In 2007, yellow spots were mainly reported from the northeastern sandy soils of The Netherlands. In the following years, a fast spread over all other regions of The Netherlands was reported. Currently, the disease has been detected in Belgium, Denmark, Germany, Poland, Slovakia, Sweden and the UK.

The infestation typically appears in July-August on the leaves of sugar beet. The first infestation is characterized by small, irregular, yellow spots on the leaves. Subsequently the yellow spots necrotize from inside out into a brownish tissue. The spots spread over the leaves and infest the whole plant. Heavily infested leaves die and on the newly formed leaves new yellow spots appear. Due to the loss of leaves the canopy falls open and in case of a severe infestation the soil becomes visible in August-September. As a consequence, sugar production in the plant is reduced, which results in serious losses in sugar yield when the beets are processed.

Research was conducted to identify the causal agent having either a viral, bacterial, fungal or nutrient deficient nature. The causal agent of this yellow spots being the fungus *Stemphylium* was confirmed by research of B. Hanse et al., Eur. J. Plant Pathol. 142 (2015). In 2016, the specific species responsible for the infestation was given the name *Stemphylium beticola* by J.H.C. Woudenberg and B. Hanse, Persoonia 36 (2016).

In addition to sugar beet, potato *(Solanum tuberosum* L.), white mustard *(Sinapsis alba* L.), red beet *(Beta vulgaris* L.), spinach *(Spinacia oleracea* L.) and fat hen *(Chenopodium album* L.) were identified as hosts in an assay of plants grown and inoculated in climate rooms.

*Cercospora beticola* is a fungal plant pathogen which is the cause of *Cercospora* leaf spot disease in sugar beets, spinach and swiss chard. Symptoms include the random distribution of spots with brownish red rings which eventually cause leaf collapse. Of these hosts, *Cercospora* leaf spot is the most economically impactful in sugar beets *(Beta vulgaris).*

Fungal pathogens are typically controlled by use of synthetic chemicals (e.g., fungicides, see Eur. J. Plant Pathol. 142 (2015), pp 319-330; WO2014/106251A1). However, field trials have shown that it is hard to control this *Stemphylium* sp. and this *Cercospora* sp. with the fungicides registered for sugar beet in the Netherlands and efficacy of control of *Stemphylium* sp. and *Cercospora* sp. differs between fungicides with active ingredients belonging to the same chemical class.

Moreover, effective synthetic chemicals can be dangerous, toxic, and expensive. In some countries, certain fungicides have been restricted or banned for these and other reasons. There is nowadays a clear tendency towards the utilization of natural products as safe alternatives to hazardous pesticides for pest and plant disease control with negligible risk to human health and the environment. As a result, the search and use of phytochemicals as natural antimicrobial agents commonly called 'biocides' is gaining popularity worldwide.

It is an object of the present invention to provide methods and compositions that are effective against *Stemphylium beticola* and/or *Cercospora beticola* on crops, such as sugar beet and potato. It is a particular object of the invention to provide such methods and compositions that do not rely on synthetic chemical fungicides, or reduce the use of such chemicals.

### SUMMARY OF THE INVENTION

The present inventors have found that certain extracts of the chicory plant have a fungicidal effect against *Stemphylium beticola* and/or *Cercospora beticola* on crops such as sugar beet and potato. This effect is believed to be due to sesquiterpene lactones contained in the extract.

The chicory plant *(Cichorium intybus* L.) is known for its pest resistance. Certain compounds found in the leaves and the roots of the chicory plant are known to act as feeding deterrents for insects. Moreover, these compounds defend the plant against herbivory. Among the compounds found in the leaves and the roots of the chicory plant are the so-called sesquiterpene lactones or 'bitter components'. These sesquiterpene lactones may be secreted by the chicory plant upon wounding of the plant's tissues. The bitter taste of the plants may be associated with the secreted sesquiterpene lactones. Sesquiterpene lactones may include but are not limited to guaianolides, eudesmanolides, or germacranolides. The guaianolides may include at least one of lactucin, 8-deoxylactucin, and lactucopicrin. At present, chicory is mainly used for the extraction of inulin. The sesquiterpene lactones that result from the extraction process are a by-product that has up to now little commercial value.

D. Mares et al., Mycopathologia, 160 (2005), pp 85-92, have investigated the use of chicory extracts from *Cichorium intybus* L. as antifungals. Mares *et al.* report that among the main components of *Cichorium intybus* are sesquiterpene lactones such as lactucin, 8-deoxylactucin, lactupicrin and 11β-dihydroterpene derivatives. The effect of the chicory extracts on the phytopathogenic fungi *Botrytis cinerea* Micheli strain no. 48339 (ATCC), *Fusarium moniliforme* Sheldon strain no. 36541 (ATCC), *Pythium ultimum* Trow strain no. 58812 (ATCC), *Phoma betae* Frank (Oud), and *Alternaria* sp was studied. The sesquiterpene lactones 8-deoxylactucin and 11,13-dihydrolactucin were isolated but were not tested on the phytopathogenic fungi. It was concluded by Mares *et al.* that the chicory extracts did not have significant inhibitory effect on phytopathogens. In some cases chicory extracts even stimulated growth of phytopathogens.

Wedge et al., Phytochemistry, 53 (2000), pp 747-757, describe that the antifungal activity of sesquiterpene lactones appears to be (fungal) species-dependent and that the biological activity depends on the type of carbon skeleton.

To the best knowledge of the present inventors, the effectiveness of chicory derived sesquiterpene lactones against *Stemphylium beticola* and against *Cercospora beticola* and/or actual application of such chicory derived sesquiterpene lactones in crop protection have not been disclosed before.

In a first aspect, the invention provides the use of a chicory extract obtainable by a process comprising the consecutive steps of:
a) providing a chicory plant material;
b) contacting the chicory plant material with an extraction solvent chosen from the group consisting of water, methanol, ethanol, ethyl acetate, and combinations thereof, preferably chosen from the group consisting of water, ethanol or ethyl acetate, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract; and
d) optionally subjecting the chicory extract obtained in step c) to one or more further steps resulting in further purification and/or concentration thereof,
as a fungicide on crops against fungal pathogens of the genus *Stemphylium,* preferably *Stemphylium beticola* sp, and/or as a fungicide on crops against fungal pathogens of the genus *Cercospora,* preferably *Cercospora beticola* sp.

In a second aspect, the invention provides the use of a fungicidal formulation obtainable by a process comprising the consecutive steps of:
a) providing a chicory plant material;
b) contacting the chicory plant material with an extraction solvent chosen from the group consisting of water, methanol, ethanol, ethyl acetate, and combinations thereof, preferably chosen from the group consisting of water, ethanol or ethyl acetate, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract;
d) optionally subjecting the chicory extract obtained in step c) to one or more further steps resulting in further purification and/or concentration thereof; and
e) diluting the chicory extract obtained in step c) or d) with a carrier liquid, wherein one or more adjuvants or additives are optionally added prior to or after dilution, wherein the carrier liquid is preferably selected from the group consisting of water and mixtures of water with a co-solvent such as methanol or ethanol, wherein the carrier liquid more preferably is water, wherein the one or more adjuvants or additives are preferably selected from the group consisting of surfactants, wetting agents, thickeners, spreaders, stickers, emulsifiers, oils, modified sugars, defoamers, organosilicates, buffering agents, preservatives, compatibility agents, plant nutrients, biosupplements, fertilizers, pesticidal agents and growth enhancing agents,
as a fungicide on crops against fungal pathogens of the genus *Stemphylium,* preferably *Stemphylium beticola* sp, and/or as a fungicide on crops against fungal pathogens of the genus *Cercospora,* preferably *Cercospora beticola* sp.

In a third aspect, the invention provides a process for preventing and/or controlling fungal infestation of crops with pathogens of the genus *Stemphylium,* preferably *Stemphylium beticola* sp, and/or for preventing and/or controlling fungal infestation of crops with pathogens of the genus *Cercospora,* preferably *Cercospora beticola* sp., said process comprising treating the crops with an extract obtainable by a process comprising the consecutive steps of:
a) providing a chicory plant material;
b) contacting the chicory plant material with an extraction solvent chosen from the group consisting of water, methanol, ethanol, ethyl acetate, and combinations thereof, preferably chosen from the group consisting of water, ethanol or ethyl acetate, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract; and
d) optionally subjecting the chicory extract obtained in step c) to one or more further steps resulting in further purification and/or concentration thereof.

In a fourth aspect, the invention provides a process for preventing and/or controlling fungal infestation of crops with pathogens of the genus *Stemphylium,* preferably *Stemphylium beticola* sp, and/or for preventing and/or controlling fungal infestation of crops with pathogens of the genus *Cercospora,* preferably *Cercospora beticola* sp., said process comprising treating the crops with a fungicidal formulation obtainable by a process comprising the consecutive steps of:
a) providing a chicory plant material;
b) contacting the chicory plant material with an extraction solvent chosen from the group consisting of water, methanol, ethanol, ethyl acetate, and combinations thereof, preferably chosen from the group consisting of water, ethanol or ethyl acetate, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract;
d) optionally subjecting the chicory extract obtained in step c) to one or more further steps resulting in further purification and/or concentration thereof; and
e) diluting the chicory extract obtained in step c) or d) with a carrier liquid, wherein one or more adjuvants or additives are optionally added prior to or after dilution, wherein the carrier liquid is preferably selected from the group consisting of water and mixtures of water with a co-solvent such as methanol or ethanol, wherein the carrier liquid more preferably is water, wherein the one or more adjuvants or additives are preferably selected from the group consisting of surfactants, wetting agents, thickeners, spreaders, stickers, emulsifiers, oils, modified sugars, defoamers, organosilicates, buffering agents, preservatives, compatibility agents, plant nutrients, biosupplements, fertilizers, pesticidal agents and growth enhancing agents.

### DETAILED DESCRIPTION

As stated here above, an aspect of the invention is directed to the use of chicory extracts comprising one or more sesquiterpene lactones and to the use of fungicidal formulations comprising such chicory extracts.

The term 'chicory', as used herein, refers to plants of the genus *Cichorium,* including plants of the species *Cichorium endivia,* plants of the species *Cichorium intybus,* varieties thereof, and hybrids thereof. The term "chicory" includes plants of the species *Cichorium intybus,* including "wild improved" chicories, "Barbe de Capucin" chicories, "sugar loaf" chicories, "Chioggia" chicories, "cicorino" chicories, "Verona" chicories, "Catalonia" chicories, "Treviso" chicories, "Variegato di Castelfranco" chicories, "Witloof" chicories (e.g., "Brussels" chicory or "chicon" chicory), "Soncino" chicories, "red" chicories (e.g., radicchios), "Industrial" chicories (e.g., chicories intended for roasting and for sugars), "fodder" or "game" chicories, and hybrids thereof. The term "chicory" also includes plants of the species *Cichorium endivia,* including curly endive, also referred to as frisee (var. *crispum*), escarole, or broad-leaved endive (var. *latifolia),* and hybrids thereof.

In preferred embodiments of the invention, the chicory is *Cichorium intybus.* In an even more preferred embodiment the chicory is a *Cichorium intybus L.* var. *sativum* (root chicory) extract, such as *Cichorium intybus* L. var. *sativum* DC.

Sesquiterpene lactones are typically found in various parts of chicory plants, such as the leaves, roots, flowers and seeds. In a preferred embodiment of the invention the sesquiterpene lactone containing extracts are obtained from chicory plant parts selected from the group consisting of leaves, roots, flowers, seeds and combinations thereof, most preferably from the leaves or the roots.

In accordance with the invention, the extracts are produced by a suitable extraction process, typically involving contacting of plant material with an extraction solvent that is capable of dissolving one or more of the target sesquiterpene lactones, followed by a solid-liquid separation step, optionally followed by one or more steps of further purifying and/or concentrating (including drying) of the sesquiterpene lactone containing liquid. As will be understood by those of average skill in the art, such processes may comprise additional steps wherein suitable plant parts are pre-treated in order to optimize the effectiveness of the extraction step.

In accordance with the invention, the chicory extract is produced by a process comprising the consecutive steps of:
a) providing a chicory plant material;
b) contacting the chicory plant material with an extraction solvent chosen from the group consisting of water, methanol, ethanol, ethyl acetate, and combinations thereof;
c) separating the extraction solvent comprising dissolved sesquiterpene lactones from the particulate plant material; and, optionally,
d) subjecting the solvent comprising dissolved sesquiterpene lactones to one or more further steps resulting in further purification and/or concentration thereof.

In a preferred embodiment, the chicory extract is produced by a process comprising the consecutive steps of:
a) providing a chicory plant material;
b) contacting the chicory plant material with an extraction solvent chosen from the group consisting of water, methanol, ethanol, ethyl acetate, and combinations thereof, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract; and
d) optionally subjecting the chicory extract obtained in step c) to one or more further steps resulting in further purification and/or concentration thereof.

In a very preferred embodiment, the chicory extract is produced by a process comprising the consecutive steps of:
a) providing a chicory plant material;
b) contacting the chicory plant material with an extraction solvent chosen from the group consisting of water, methanol, ethanol, ethyl acetate, and combinations thereof, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract; and
d) subjecting the chicory extract obtained in step c) to one or more filtration steps and a concentration step to obtain a chicory extract having a dry solids content of 5 wt.% or more, based on the total weight of the chicory extract, preferably a dry solids content of 10 wt.% or more, such as 20 wt.% or more, 50 wt.% or more, 90 wt.% or more and 98 wt.% or more.

In accordance with the invention, the chicory plant material as provided in step a) may comprise fresh plants, fresh plant parts and/or physically, mechanically and/or chemically treated plant parts. In a preferred embodiment of the invention, step a) comprises the steps of a1) providing chicory plant parts, in particular chicory leaves and/or chicory roots; and a2) subjecting the chicory plant parts to mechanical operation such as cutting, crushing, shredding, milling or the like. Step a1), in accordance with the invention, may comprise harvesting of chicory crop, separating and collecting the target chicory plant part(s) from the chicory plant and/or washing of the chicory plant or chicory plant parts, typically with (tap) water at ambient temperature. Step a2) is typically performed to yield a particulate chicory plant material, comprising particles, such as strips, slices, or cubes having a particle size in the range of 0.1-10cm, preferably 0.5-2 cm. Typically the particle size is about 1 cm. In this context particle size refers to the major dimension of the particle, typically the average major dimension. Typically, at least 50 %, at least 60 %, at least 70 %, at least 80 %, at least 90 % or at least 95 % of the particles have a major dimension within the recited ranges.

In accordance with the invention, step b) comprises contacting the chicory plant material with an extraction solvent, typically it comprises the immersion of said plant material in said solvent for a suitable period of time. In certain embodiments of the invention, the extraction process is aimed at the extraction of apolar components from the chicory plant material. The process used for extracting sesquiterpene lactones from chicory plant (parts) can be performed using various extraction solvents, resulting in chicory extracts comprising different sesquiterpene lactone combinations. In one embodiment of the invention, the extraction solvent is characterized by a relative polarity within the range of 0.100 - 0.300, preferably within the range of 0.200 - 0.250 In another embodiment of the invention, the extraction solvent is characterized by a relative polarity within the range of 0.500 - 0.900, preferably within the range of 0.600 - 0.800. In another embodiment of the invention, the extraction solvent is characterized by a relative polarity within the range of 0.900 - 1.000 preferably within the range of 0.950 - 1.000. Relative polarity values are known to the skilled person, preferably the relative polarity is determined as a normalized value from measurements of solvents shifts of adsorption spectra, wherein water has a relative polarity value of 1, as explained in Christian Reichardt, Solvents and Solvent Effects in Organic Chemistry, Wiley-VCH Publishers, 3rd ed., 2003.

Particularly good results have been attained with chicory extracts obtainable by the processes as defined herein, wherein the extraction solvent was selected from the group consisting of water, methanol, ethanol, ethyl acetate and combinations thereof. In one embodiment of the invention the chicory extract is obtainable by extraction of chicory plant material with water. In one embodiment of the invention the chicory extract is obtainable by extraction of chicory plant material with ethanol or a mixture of water and ethanol. In preferred embodiments, the chicory extract is obtainable by extraction of the chicory plant material with a mixture comprising more than 80 vol% ethanol and less than 20 vol% water; preferably with a mixture comprising more than 90 vol% ethanol and less than 10 vol% water, preferably with a mixture comprising more than 95 vol% ethanol and less than 5 vol% water; preferably with a mixture comprising more than 99 vol% ethanol and less than 1 vol% water; most preferably with absolute ethanol. In one embodiment of the invention the chicory extract is obtainable by extraction of chicory plant material with a liquid comprising ethyl acetate, preferably a liquid comprising more than 90 vol% ethyl acetate, preferably more than 95 vol% ethyl acetate, preferably more than 99 vol% ethyl acetate, most preferably pure ethyl acetate. It will be understood by those of average skill in the art, that conditions for performing the extraction step, such as the temperature, solvent to plant material ratio, agitation or stirring of the mixture, extraction time, etc., may be varied. Such variations will primarily affect the efficiency of the extraction process. It is within the skilled person's routine capabilities to optimize the extraction process in this regard. In preferred embodiments of the invention, the mixture of the plant material and the extraction solvent is kept at a temperature within the range of 15-70 °C, in step b), more preferably at a temperature within the range of 30 - 60 °C, more preferably within the range of 40 - 50 °C. In a preferred embodiment of the invention, step b) comprises combining the chicory plant material and the extraction solvent at relative amounts within the range of 1 - 20 liters of solvent per kg of chicory plant material, preferably 5 - 15 liters of solvent per kg of chicory plant material, more preferably 8 - 12 liters of solvent per kg of chicory plant material. In a preferred embodiment of the invention, the extraction in step b) is performed for a period of between 30 and 90 minutes, more preferably between 40 and 80 minutes, still more preferably between 50 and 70 minutes, such as about 60 minutes. In accordance with the invention, step c) typically comprises decanting the solvent from the plant material and/or subjecting the mixture of the plant material and the solvent to pressing, such as filter pressing or screw pressing; centrifugation; settling or any combination of such treatments. It will be understood that the choice of separation technique must not have any significant impact on the sesquiterpene combinations accordingly obtained, but will primarily affect the efficiency of the process.

In accordance with the invention, step d) may comprise any conventional purification step, such as additional solid-liquid and/or liquid-liquid extraction treatments, additional filtration steps, (preparative) chromatographic treatments, etc., and/or any conventional concentration and/or drying process. It will be understood that the choice of purification technique and/or concentration technique must not have any significant impact on the sesquiterpene combinations accordingly obtained.

As will be apparent from the present teachings, chicory extracts that can advantageously be used in accordance with the invention comprise or consist of one or more sesquiterpene lactones. The one or more sesquiterpene lactones are believed to constitute the active part of the extracts in relation to the fungicidal effects thereof. Besides the one or more sesquiterpene lactones, the chicory extracts will typically comprise other chicory derived components that are soluble in the extraction solvent to any significant degree. The inventors have established that chicory extracts obtained with extraction solvents of different polarity all have a number of sesquiterpene lactones in common, whereas other ingredients may differ.

In a preferred embodiment of the invention, the chicory extracts contain at least 3 wt.% of sesquiterpene lactones, based on the total solids weight of the extract. More preferably, the sesquiterpene lactones in total make up at least 5 wt.%, at least 10 wt.% at least 15 wt.% at least 20 wt.% or at least 25 wt.% of the extract, based on the total solids weight thereof. Typically, the sesquiterpene lactones in total make up less than 80 wt.%, less than 70 wt.%, less than 60 wt.%, or less than 50 wt.% of the extract, based on total solids weight.

The sesquiterpene lactones lactucin, 11,13-dihydrolactucin, 8-deoxylactucin, 11,13-dihydro-8-deoxylactucin, 11,13-dihydrolactucopicrin and lactucopicrin, optionally in the form of esters and salts are currently believed to make up the majority of the sesquiterpene lactones in the chicory extract of the invention. In preferred embodiments of the invention, the total amount of sesquiterpene lactones in the chicory extract may be approximated by the total amount of lactucin, 11,13-dihydrolactucin, 8-deoxylactucin, 11,13-dihydro-8-deoxylactucin, 11,13-dihydro-lactucopicrin and lactucopicrin, including esters and salts thereof, in the chicory extract.

In preferred embodiments of the invention, the sesquiterpene lactones are selected from the group consisting of lactucin, 11,13-dihydrolactucin, 8-deoxylactucin, 11,13-dihydro-8-deoxylactucin, 11,13-dihydrolactucopicrin and lactucopicrin. The present inventors have determined that most or all of these sesquiterpene lactones also exist in the form of an ester, in particular in the form of an oxalate ester. In preferred embodiments of the invention, the chicory extracts contain at least two, at least three, at least four, at least five or at least six sesquiterpene lactones selected from the group consisting of lactucin, 11,13-dihydrolactucin, 8-deoxylactucin, 11,13-dihydro-8-deoxylactucin, 11,13-dihydrolactucopicrin and lactucopicrin, wherein each of these sesquiterpene lactones may be partially present in the form of an ester, in particular in the form of the oxalate ester. In preferred embodiments of the invention, the chicory extracts contain at least two, at least three, at least four, at least five or at least six, at least seven, at least eight or at least nine sesquiterpene lactones selected from the group consisting of lactucin, 11,13-dihydrolactucin, 8-deoxylactucin, 8-deoxylactucin-15-oxalate, 11,13-dihydro-8-deoxylactucin, 11,13-dihydrolactucopicrin, 11,13-dihydrolactucopicrin-15-oxalate, lactucopicrin and lactucopicrin-15-oxalate.

In a preferred embodiment of the invention, the chicory extracts comprise lactucin, optionally in the form of an ester, such as the oxalate ester, typically in an amount of at least 1 wt.% of the total amount of sesquiterpene lactones contained in the extract. In embodiments of the invention, it is preferred that lactucin, including esters thereof, makes up at least 2 wt.%, at least 3 wt.%, at least 4 wt.%, at least 5 wt.%, at least 6 wt.%, at least 7 wt.%, at least 8 wt.%, at least 9 wt.%, at least 10 wt.%, at least 11 wt.%, or at least 12 wt.% of the total amount of sesquiterpene lactones in the chicory extract. Furthermore, in embodiments of the invention, it is preferred that lactucin, including esters thereof, makes up less than 30 wt.%, less than 25 wt.%, less than 20 wt.%, less than 15 wt.%, less than 10 wt.% or less than 5 wt.%, of the total amount of sesquiterpene lactones in the chicory extract.

In a preferred embodiment of the invention, the chicory extracts comprise 11,13-dihydrolactucin, optionally in the form of an ester, such as the oxalate ester, typically in an amount of at least 1 wt.% of the total amount of sesquiterpene lactones contained in the extract. In embodiments of the invention, it is preferred that 11,13-dihydrolactucin, including esters thereof, makes up at least 10 wt.%, at least 25 wt.% at least 50 wt.% at least 75 wt.% or at least 80 wt.% of the total amount of sesquiterpene lactones in the chicory extract. Furthermore, in embodiments of the invention, it is preferred that 11,13-dihydrolactucin, including esters thereof, makes up less than 95 wt.%, less than 90 wt.%, less than 85 wt.%, less than 25 wt.%, less than 20 wt.% or less than 15 wt.%, of the total amount of sesquiterpene lactones in the chicory extract.

In a preferred embodiment of the invention, the chicory extracts comprise 8-deoxylactucin, optionally in the form of an ester, such as the oxalate ester, typically in an amount of at least 0.5 wt.% of the total amount of sesquiterpene lactones contained in the extract. In embodiments of the invention, it is preferred that 8-deoxylactucin, including esters thereof, makes up at least 1 wt.%, at least 1.5 wt.% at least 2 wt.% at least 2.5 wt.%, at least 3 wt.%, at least 3.5 wt.% or at least 4 wt.% of the total amount of sesquiterpene lactones in the chicory extract. Furthermore, in embodiments of the invention, it is preferred that 8-deoxylactucin, including esters thereof, makes up less than 20 wt.%, less than 15 wt.%, less than 10 wt.%, less than 7.5 wt.%, less than 5 wt.%, less than 4 wt.%, less than 3 wt.% or less than 2.5 wt.%, of the total amount of sesquiterpene lactones in the chicory extract.

In a preferred embodiment of the invention, the chicory extracts comprise 11,13-dihydro-8-deoxylactucin, optionally in the form of an ester, such as the oxalate ester, typically in an amount within the range of at least 0.05 wt.% of the total amount of sesquiterpene lactones contained in the extract. In embodiments of the invention, it is preferred that 11,13-dihydro-8-deoxylactucin, including esters thereof, makes up at least 1 wt.%, at least 1.5 wt.% at least 2 wt.% at least 5 wt.%, at least 7.5 wt.%, at least 10 wt.%, at least 11 wt.%, at least 12 wt.% or at least 13 wt.% of the total amount of sesquiterpene lactones in the chicory extract. Furthermore, in embodiments of the invention, it is preferred that 8-deoxylactucin, including esters thereof, makes up less than 25 wt.%, less than 20 wt.%, less than 15 wt.%, less than 10 wt.% or less than 5 wt.%, of the total amount of sesquiterpene lactones in the chicory extract.

In a preferred embodiment of the invention, the chicory extracts comprise lactucopicrin, optionally in the form of an ester, such as the oxalate ester, typically in an amount of at least 1 wt.% of the total amount of sesquiterpene lactones contained in the extract. In embodiments of the invention, it is preferred that lactucopicrin, including esters thereof, makes up at least 2.5 wt.%, at least 5 wt.% at least 7.5 wt.% at least 9 wt.%, at least 10 wt.% or at least 11 wt.% of the total amount of sesquiterpene lactones in the chicory extract. Furthermore, in embodiments of the invention, it is preferred that lactucopicrin, including esters thereof, makes up less than 35 wt.%, less than 20 wt.%, less than 15 wt.%, less than 10 wt.%, less than 5 wt.%, less than 2.5 wt.%, or less than 1 wt.% of the total amount of sesquiterpene lactones in the chicory extract.

In a preferred embodiment of the invention, the chicory extracts comprise 11,13-dihydrolactucopicrin, optionally in the form of an ester, such as the oxalate ester, typically in an amount of at least 1 wt.% of the total amount of sesquiterpene lactones contained in the extract. In embodiments of the invention, it is preferred that dihydrolactucopicrin, including esters thereof, makes up at least 5 wt.%, at least 10 wt.% at least 20 wt.% at least 30 wt.%, at least 40 wt.%, at least 50 wt.%, at least 60 wt.%, at least 70 wt.%, of the total amount of sesquiterpene lactones in the chicory extract. Furthermore, in embodiments of the invention, it is preferred that dihydrolactucopicrin, including esters thereof, makes up less than 75 wt.%, less than 65 wt.%, less than 60 wt.%, less than 10 wt.% or less than 5 wt.% or less than 2.5 wt.%, of the total amount of sesquiterpene lactones in the chicory extract.

In embodiments of the invention, the chicory extracts comprise sugars, such as glucose, fructose, an sucrose, typically in an amount within the range of 0 to 20 wt.%, based on the total dry solids weight of the extract. In embodiments of the invention, the amount of sugars, is at least 0.1 wt.%, at least 5 wt.% at least 10 wt.% at least 15 wt.% or at least 20 wt.% on the basis of the dry solids weight of the chicory extract. Furthermore, in embodiments of the invention the amount of sugars is less than 5 wt.%, less than 4 wt.%, less than 3 wt.%, less than 2 wt.% or less than 1 wt.%, on the basis of the dry solids weight of the chicory extract.

In embodiments of the invention, the chicory extracts comprise inulin, typically in an amount within the range of 0 to 70 wt.%, based on the total dry solids weight of the extract. More preferably, the amount of inulin is at least 0.1 wt.%, at least 10 wt.% at least 30 wt.% at least 50 wt.% or at least 60 wt.%, on the basis of the dry solids weight of the chicory extract. Furthermore, it is preferred that the amount of inulin is less than 60 wt.%, less than 30 wt.%, less than 10 wt.%, less than 5 wt.% or less than 1 wt.%, on the basis of the dry solids weight of the chicory extract.

In embodiments of the invention, the chicory extracts comprise minerals, such as calcium, magnesium, potassium and sodium, typically in an amount within the range of 0 to10 wt.%, based on the total dry solids weigh of the extract. More preferably, the amount of minerals is at least 0.1 wt.%, at least 4 wt.% at least 6 wt.% at least 8 wt.% or at least 10 wt.% on the basis of the dry solids weight of the chicory extract. Furthermore, it is preferred that the amount of minerals is less than 6 wt.%, less than 4 wt.%, less than 2 wt.%, less than 1 wt.% or less than 0.5 wt.%, on the basis of the dry solids weight of the chicory extract.

In embodiments of the invention, the chicory extracts comprise polyphenols, such as caffeic acid, chlorogenic acid and chicoric acid, typically in amounts within the range of 0 to 5 wt.%, based on the total dry solids weight. More preferably, the amount of polyphenols is at least 0.1 wt.%, at least 2 wt.% at least 3 wt.% at least 4 wt.% or at least 5 wt.% on the basis of the dry solids weight of the chicory extract. Furthermore, it is preferred that the amount of polyphenols is less than 2 wt.%, less than 1 wt.%, less than 0.5 wt.%, less than 0.3 wt.% or less than 0.1 wt.%, on the basis of the dry solids weight of the chicory extract.

In preferred embodiments of the invention, the chicory extracts comprise 11,13-dihydrolactucin, 11,13-dihydro-8-deoxylactucin and 11,13-dihydrolactucopicrin, preferably in the relative amounts as recited here above.

In preferred embodiments of the invention, the chicory extracts comprise 11,13-dihydrolactucin, 11,13-dihydro-8-deoxylactucin, 11,13-dihydrolactucopicrin, lactucin, 8-deoxylactucin, and lactucopicrin, preferably in the relative amounts as recited here above.

In an embodiment of the invention, the chicory extract comprises the following combination of sesquiterpene lactones:
- 5-25 wt.%, e.g. about 15 wt.%, of lactucin optionally in the form of an ester, such as the oxalate ester;
- 1-70 wt.%, e.g. about 30 wt.%, of 11,13-dihydrolactucin optionally in the form of an ester, such as the oxalate ester;
- 1-15 wt.%, e.g. about 5 wt.%, of 8-deoxylactucin, optionally in the form of an ester, such as the oxalate ester;
- 0.5-20 wt.%, e.g. about 5 wt.%, of 11,13-dihydro-8-deoxylactucin, optionally in the form of an ester, such as the oxalate ester;
- 1-40 wt.%, e.g. about 20 wt.%, of lactucopicrin, optionally in the form of an ester, such as the oxalate ester; and
- 1-60 wt.%, e.g. about 25 wt.%, of 11,13-dihydrolactucopicrin, optionally in the form of an ester, such as the oxalate ester;
wherein the percentage amounts are based on the total amount of sesquiterpene lactones in the chicory extract. Such extracts can typically be obtained using ethyl acetate as the extraction solvent.

In an embodiment of the invention, the chicory extract comprises the following combination of sesquiterpene lactones:
- 1-15 wt.%, e.g. about 8 wt.%, of lactucin optionally in the form of an ester, such as the oxalate ester;
- 0.5-10 wt.%, e.g. about 2 wt.%, of 11,13-dihydrolactucin optionally in the form of an ester, such as the oxalate ester;
- 5-20 wt.%, e.g. about 9 wt.%, of 8-deoxylactucin, optionally in the form of an ester, such as the oxalate ester;
- 0.05-5 wt.%, e.g. about 1 wt.%, of 11,13-dihydro-8-deoxylactucin, optionally in the form of an ester, such as the oxalate ester;
- 20-40 wt.%, e.g. about 30 wt.%, of lactucopicrin, optionally in the form of an ester, such as the oxalate ester; and
- 35-70 wt.%, e.g. about 50 wt.%, of 11,13-dihydrolactucopicrin, optionally in the form of an ester, such as the oxalate ester;
wherein the percentage amounts are based on the total amount of sesquiterpene lactones in the chicory extract. Such extracts can typically be obtained using ethanol as the extraction solvent.

In an embodiment of the invention, the chicory extract comprises the following combination of sesquiterpene lactones:
- 5-40 wt.%, e.g. about 20 wt.%, of lactucin optionally in the form of an ester, such as the oxalate ester;
- 1-15 wt.%, e.g. about 10 wt.%, of 11,13-dihydrolactucin optionally in the form of an ester, such as the oxalate ester;
- 5-25 wt.%, e.g. about 15 wt.%, of 8-deoxylactucin, optionally in the form of an ester, such as the oxalate ester;
- 0.5-10 wt.%, e.g. about 5 wt.%, of 11,13-dihydro-8-deoxylactucin, optionally in the form of an ester, such as the oxalate ester;
- 5-35 wt.%, e.g. about 30 wt.%, of lactucopicrin, optionally in the form of an ester, such as the oxalate ester; and
- 15-50 wt.%, e.g. about 30 wt.%, of 11,13-dihydrolactucopicrin, optionally in the form of an ester, such as the oxalate ester;
wherein the percentage amounts are based on the total amount of sesquiterpene lactones in the chicory extract. Such extracts can typically be obtained using water as the extraction solvent.

In an embodiment of the invention, the chicory extract comprises the following combination of sesquiterpene lactones:
- 1-35 wt.%, e.g. about 15 wt.%, of lactucin;
- 0.5-65 wt.%, e.g. about 10 wt.%, of 11,13-dihydrolactucin;
- 0.05-10 wt.%, e.g. about 5 wt.%, of 8-deoxylactucin-15-oxalate
- 1-25 wt.%, e.g. about 5 wt.%, of 8-deoxylactucin;
- 0.05-20 wt.%, e.g. about 5 wt.%, of 11,13-dihydro-8-deoxylactucin;
- 0.5-40 wt.%, e.g. about 20 wt.%, of lactucopicrin-15-oxalate;
- 1-70 wt.%, e.g. about 35 wt.%, of 11,13-dihydrolactucopicrin-oxalate;
- 0.05-5 wt.%, e.g. about 1 wt.%, of 11,13-dihydrolactucopicrin; and
- 0.5-10 wt.%, e.g. about 4 wt.%, of lactucopicrin.
wherein the percentage amounts are based on the total amount of sesquiterpene lactones in the chicory extract. Such extracts can typically be obtained using water as the extraction solvent.

The chicory extract used in the present invention can suitably be processed into a liquid or solid product. Typically the chicory extract is provided in a form that facilitates transportation, storage and handling in the best possible way. It will especially be considered convenient, in many cases, to provide the chicory extract in a highly concentrated form that can easily be diluted or dissolved with a predetermined quantity of plain (tap) water in order to provide it in ready-to-use form. Hence, in embodiments of the invention, chicory extracts as defined herein are provided in the form of a free-flowing powder or a liquid concentrate.

As used herein, the term 'fungicidal formulation' refers to a composition that can be used on crop to prevent or control fungal infestation, without causing harm to said crop. In accordance with the invention, the fungicidal formulations comprise i) a chicory extract containing one or more sesquiterpene lactones in admixture with ii) a liquid carrier and iii) one or more adjuvants or additives such as, but not limited to: surfactants; wetting agents; thickening agents; spreaders; stickers; oils; anti-foaming materials; buffering agents; compatibility agents; nutrients; fertilizers; and growth enhancing agents. Those skilled in the art will recognize that suitable combinations and amounts of adjuvants and/or additives are those which do not cause damage to the target plant(s).

In certain embodiments, the formulations contain a total amount of the chicory extract within the range 0.0001-30 wt.%, based on the total weight of the fungicidal formulation, preferably 0.0005-10 wt.%, 0.001-1 wt.%, 0.005-0.5 wt.%, 0.01-0.1 wt.% or 0.02-0.05 wt.%.

In preferred embodiments of the invention, the fungicidal formulation comprises, based on the total weight thereof, at least 0.0001 wt.%, at least 0.001 wt.%, at least 0.005 wt.%, at least 0.01 wt.%, or at least 0.02 wt.% of the chicory extract. In other embodiments of the invention, the fungicidal formulation comprises, based on the total weight thereof, at least 0.1 wt.%, at least 0.5 wt.%, at least 1 wt.%, at least 2 wt.% or at least 3 wt.% of the chicory extract.

In preferred embodiments of the invention, the fungicidal formulation comprises, based on the total weight thereof, less than 5 wt.%, less than 3 wt.%, less than 1 wt.%, less than 0.5 wt.%, less than 0.1 wt.% or less than 0.05 wt.% of the chicory extract. In other embodiments of the invention, the fungicidal formulation comprises, based on the total weight thereof, less than 30 wt.%, less than 25 wt.%, less than 20 wt.%, less than 15 wt.% or less than 10 wt.% of the chicory extract.

In highly preferred embodiments of the invention, the fungicidal formulation comprises, based on the total weight thereof:
- less than 5 wt.%, less than 3 wt.%, less than 1 wt.%, less than 0.5 wt.%, less than 0.1 wt.% or less than 0.05 wt.% of the chicory extract, and
- at least 0.0001 wt.%, at least 0.001 wt.%, at least 0.005 wt.%, at least 0.01 wt.%, or at least 0.02 wt.% of the chicory extract.

In certain embodiments, the formulations contain a total amount of sesquiterpene lactones within the range of 1 - 100000 ppm, based on the total weight of the fungicidal formulation, preferably 5-10000 ppm, 10-1000 ppm, 40-500 ppm, 100-250 ppm, or 150-200 ppm.

In preferred embodiments of the invention, the fungicidal formulation comprises, based on the total weight thereof, at least 1 ppm, at least 5 ppm, at least 10 ppm, at least 50 ppm, at least 100 ppm or at least 150 ppm of sesquiterpene lactones. In other embodiments of the invention, the fungicidal formulation comprises, based on the total weight thereof, at least 500 ppm, at least 1500 ppm, at least 3000 ppm, at least 15000 ppm or at least 30000 ppm of sesquiterpene lactones.

In preferred embodiments of the invention, the fungicidal formulation comprises, based on the total weight thereof, less than 20000 ppm, less than 10000 ppm, less than 1000 ppm, less than 500 ppm, less than 300 ppm or less than 200 ppm of sesquiterpene lactones. In other embodiments of the invention, the fungicidal formulation comprises, based on the total weight thereof, less than 200000 ppm, less than 100000 ppm, less than 50000 ppm of sesquiterpene lactones.

In highly preferred embodiments of the invention, the fungicidal formulation comprises, based on the total weight thereof, at least 0.1 ppm, at least 1 ppm, at least 10 ppm, at least 50 ppm or at least 100 ppm of sesquiterpene lactones; and less than 20000 ppm, less than 10000 ppm, less than 5000 ppm, less than 2500 ppm, less than 1000 ppm or less than 500 ppm of sesquiterpene lactones.

The fungicidal formulations used in the present invention comprise a liquid carrier. As will be understood by those skilled in the art, a carrier should be selected wherein the sesquiterpene lactones and other ingredients can be dissolved, emulsified or dispersed at appropriate quantities to facilitate distribution of the composition onto crop in an appropriate manner. As will be understood by those skilled in the art, the carrier preferably is a liquid that produces no harm to the crop and/or the environment. Hence, the present fungicidal formulations are typically aqueous due to the water-soluble nature of the chicory extract. Hence, in one particularly preferred embodiment of the invention, a carrier is selected from the group of water and mixtures of water with a co-solvent such as methanol or ethanol. In a particularly preferred embodiment the carrier is water, e.g. plain tap water.

Notwithstanding the water-soluble nature of the chicory extract, it is to be understood that suspensions and emulsions are included within the scope of the present invention. In nonaqueous formulations, a variety of organic solvents can be used. In various embodiments, the formulations contain one or more commercially available hydrophobic organic solvents such as, but not limited to: Hisol SAS-296 (a mixture of 1-phenyl-1-xylylethane and 1-phenyl-1-ethylphenylethane); Hisol SAS-LH; Shellsol A, AB, E, R, T, or D-70; Cactus Solvent HP-MN (containing 80% of methylnaphthalene); Cactus Solvent HP-DMN (containing 80% of dimethylnaphthalene); Cactus Solvent P-100 (alkylbenzene having 9 to 10 of carbon number); Cactus Solvent P-150 (alkylbenzene); Cactus Solvent P-180 (a mixture of methylnaphthalene and dimethylnaphthalene); Cactus Solvent P-200 (a mixture of methylnaphthalene and dimethylnaphthalene); Cactus Solvent P-220 (a mixture of methylnaphthalene and dimethylnaphthalene); Cactus Solvent PAD-1 (dimethylmonoisopropylnaphthalene); Solvesso 100, 150, or 200 (aromatic hydrocarbons); Suwasol 100 (toluene); Suwasol 200 (xylene); Vinycizer 20 (diisotridecyl phthalate); Vinycizer 40 (diisobutyl adipate); Vinycizer 50 (diisodecyl adipate); Vinycizer 85 (dialkyl phthalate); Vinycizer 105 (didecyl phthalate); Vinycizer 124 (dialkyl phthalate); Excepal O-OL (octyl oleate); Excepal L-OL (lauryl oleate); Excepal OD-OL (octyldodecyl oleate); Toxanon PP-1000 (polyoxypropylene glycol); Nikkol IPA-A (isopropyl myristate); Nikkol IPA-EX (isopropyl myristate); Teclean N-30; Teclean N-32; Teclean N-33; Mineral oil 46P; Pesticidal mineral oil P; Pesticidal oil H; Super oil A; Super oil B; Super oil C; Super oil D; Super oil E; Super oil F; Spindle oil No. 1; Spindle oil No. 2; Mineral oil B; Mineral oil C; Naphthesol M; Isosol 300; Isosol 400; Exxol D80, D110, D130 (a mixture of paraffin and cycloparaffin), or D160 (a mixture of paraffin and cycloparaffin); Isopar E, G, H, or M; Neo-Chiozol (kerosene); IP Solvent 2028 or 2835 (isoparaffin oil); Naplex 38 (naphthene oil); Whitelex 205, 207, 215, 247, 2210, 307, 309, 326, or 335; and combinations thereof.

In preferred embodiments, the fungicidal formulations used in the invention contain one or more adjuvants or additives selected from the group consisting of surfactants, wetting agents, thickeners, spreaders, stickers, emulsifiers, oils, modified sugars, defoamers, organosilicates, buffering agents, preservatives, compatibility agents, plant nutrients, biosupplements, fertilizers, pesticidal agents and growth enhancing agents.

In certain embodiments, the fungicidal formulations used in the invention contain an adjuvant or additive selected from the group of surfactants. Surfactants facilitate the emulsifying, dispersing, spreading, wetting, or other surface modifying properties of the aqueous formulation. Surfactants may also enhance foaming and other spreading properties. Suitable surfactants include, but are not limited to: anionic surfactants; cationic surfactants; amphoteric surfactants; nonionic surfactants; and blends thereof.

Surfactants or blends thereof may be present in the formulation at a level within the range of 0.1 - 10 wt.%, based on the total weight of the fungicidal formulation. In preferred embodiments of the invention, the fungicidal formulation comprises, based on the total weight thereof, at least 0.1 wt.%, at least 0.5 wt.%, at least 1 wt.%, at least 2 wt.% or at least 5 wt.% of surfactants or blends thereof. In preferred embodiments of the invention, the fungicidal formulation comprises, based on the total weight thereof, less than 10 wt.%, less than 8 wt.%, less than 5 wt.%, less than 3 wt.% or less than 1 wt.% of surfactants or blends thereof.

Nonionic surfactants are preferred because they remain stable and do not cause harm to plants when properly used. Nonionic surfactants can include, but are not limited to: sugar-ester type nonionic surfactants, exemplified by sorbitan fatty acid esters, polyoxyethylenesorbitan fatty acid esters, and sucrose fatty acid esters; fatty acid ester type nonionic surfactants, exemplified by polyoxyethylene fatty acid esters, polyoxyethylene resin acid esters and polyoxyethylene fatty acid diesters; vegetable oil type nonionic surfactants, exemplified by polyoxyethylene castor oil and hydrogenated polyoxyethylene castor oil; alcohol type nonionic surfactants, exemplified by polyoxyelhylenealkyl ethers; alkylphenol type nonionic surfactants, exemplified by polyoxyethylenealkyl phenyl ethers, polyoxyelhylenedialkyl phenyl ethers and polyoxyethylenealkyl phenyl ether-formalin condensates; polyoxyethylene-polyoxyopropylene block polymer type nonionic surfactants, exemplified by polyoxyethylene-polyoxypropylene block polymers, aikylpolyoxyethylene-polyoxypropylene block polymer ethers, and alkylphenylpolyoxyethylene-polyoxypropylene block polymer ethers; bisphenol type nonionic surfactants, exemplified by polyoxybisphenyl ethers; polyaromatic ring type nonionic surfactants, exemplified by polyoxyalkylenebenzyl phenyl ethers and polyoxyalkylenestyryl phenyl ethers; silicone type nonionic surfactants, exemplified by polyoxyethylene ether type silicone surfactants and polyoxyethylene ester type silicone surfactants; fluorine type nonionic surfactants; and combinations thereof.

Anionic surfactants include, but are not limited to: sulfate type anionic surfactants, exemplified by alkyl sulfates, polyoxyethylenealkyl ether sulfates, polyoxyethylenealkyl phenyl ether sulfates, polyoxystyryl phenyl ether sulfates, and polyoxyethylene-polyoxypropylene block polymer sulfates; sulfonate type anionic surfactants, exemplified by paraffinsulfonates, dialkyl sulfosuccinates, alkylbenzenesulfonates, monoalkylnaphthalenesulfonates, dialkylnaphthalene-sulfonates, naphthalenesulfonate-formalin condensates, alkyl diphenyl ether disulfonates, ligninsulfonates, and polyoxyethylenealkyl phenyl ether sulfonates; and phosphate type anionic surfactants, exemplified by polyoxyethylenealkyl ether phosphates, polyoxyethylenemonoalkyl phenyl ether phosphates, polyoxyethylenedialkyl phenyl ether phosphates, polyoxyethylenestyryl phenyl ether phosphates, polyoxyethylene-polyoxypropylene block polymer phosphates, and alkylphosphates.

Amphoteric surfactants include, but are not limited to: didecyl ethanolamine oxide; dodecyl dimethylamine oxide; tetradecyl dimethylamine oxide; hexadecyl dimethylamine oxide; octadecyl methylamine oxide; coco dimethylamine oxide; coco bis(2-hydroxyethylamine oxide; dicocomethylamine oxide; dicocoethanolamine oxide; cocoylamidopropyl dimethylamine oxide; tallow dimethylamine oxide; tallow diethanolamine oxide; ditallow methylamine oxide; ditallow ethanolamine oxide; di(hydrogenated tallow) methylamine oxide; tallowylamidopropyl dimethylamine oxide; 9-octadecenoyl dimethylamine oxide; N-cocomorpholine N-oxide; coco dimethylbetaine; cocoylamidopropyl dimethyl betaine; lauroylamidopropyl dimethyl betaine; cocoamphocarboxyglycinate; tallow amphopolycarboxyglycinate; N-coco-3-aminobutyric acid; and combinations thereof.

Cationic surfactants include, but are not limited to: secondary, tertiary, or quaternary ammonium compounds in which all amine hydrogens have been replaced by organic radical substitutions; simple ammonium salts containing a long-chain alkyl group which confers hydrophobicity and one or more amine hydrogens; ethoxylated amines; phosphonium compounds; sulfonium compounds; arsonium compounds; heterocyclic materials such as pyridinium, morpholinium, and imidazolinium derivatives; and combinations thereof.

In certain embodiments, the fungicidal formulations used in the invention contain an adjuvant or additive selected from the group of defoamers, or foam-inhibitors. Suitable defoamers include, but are not limited to: fatty acid alkyl ester alkoxylates; organopolysiloxanes such as polydimethylsiloxanes and mixtures thereof with microline or silanized silica; perfluoroalkylphosphonates and perfluoroalkyl-phosphinates; paraffins; waxes; microcrystalline waxes; mixtures of waxes and microcrystalline waxes with silanized silica; and combinations thereof. Mixtures of different foam inhibitors are particularly useful defoamers, such as those comprising silicone, liquid paraffin, and/or waxes.

In certain embodiments, the fungicidal formulations used in the invention contain an adjuvant or additive selected from the group of wetting agents. Wetting agents break the surface tension of water, similar to surfactants, but rely on different chemistry from surfactants. Suitable wetting agents include, but are not limited to, polyoxyethylene esters, ethoxy sulfates, derivatives of ethoxy sulfates mixed with nonionic surfactants, alcohol ethoxylates, and alcohol propoxylates.

In certain embodiments, the fungicidal formulations used in the invention contain an adjuvant or additive selected from the group of penetrants. Penetrants are used to dissolve or penetrate waxy layers on leaves, which allows other chemical to interface with plant cells. Suitable penetrants can contain petroleum by-products, crop oils, complex alcohols, or other hydrocarbons.

In certain embodiments, the fungicidal formulations used in the invention contain an adjuvant or additive selected from the group of thickeners. Thickeners make the solution more viscous and heavier. Thickeners can be beneficial by reducing drift, odor, and waste of spray solutions. Suitable thickeners include, but are not limited to, polyacrylamide, polyethylene polymers, polysaccharides, vegetable oils, xanthan gum, cellulose, carboxycellulose, methylcellulose, ethylcellulose, propylcellulose, and bentonites. In particular embodiments, thickeners are present in an amount ranging from about 0.01% by weight to about 5% by weight of the formulation.

In certain embodiments, the fungicidal formulations used in the invention contain an adjuvant or additive selected from the group of emulsifier agents. Emulsifier agents may prevent coagulation. Emulsifiers help aqueous solutions mix with petroleum-based liquids. Suitable emulsifiers (other than certain surfactants listed above that also act as emulsifiers) include, but are not limited to: carboxylates; sulfates; sulfonates; alcohol ethoxylates; alkyl phenol ethoxylates; fatty acid ethoxylates; sorbitan esters; ethoxylated fats or oils; amine ethoxylates; phosphate esters; ethylene oxide-propylene oxide copolymers; fluorocarbons; silicon polymers; polyalkylene glycol ethers; polyalkoxylated nonyl phenyls; alkoxylated primary alcohols; ethoxylated distryrylphenols; ethoxylated distyrylphenol sulfate; ethoxylated tristyrylphenol phosphate; tristyrylphenol phosphate ester; hydroxylated stearic acid polyalkylene glycol polymers; and combinations thereof.

In certain embodiments, the fungicidal formulations used in the invention contain an adjuvant or additive selected from the group of spreaders. Spreaders cause the surface tension of the solution to be reduced in such a manner that it easily spread into a thin film over a surface. Spreaders can increase the efficiency of a pesticide formulation. Suitable spreaders include, but are not limited to, fatty acids, latex, aliphatic alcohols, crop oils, and inorganic oils.

In certain embodiments, the fungicidal formulations used in the invention contain an adjuvant or additive that helps the formulation stick to the plants after spreading. Stickers are similar to thickening agents or oils in that they cause the solution to adhere to the leaf surface. Stickers can also cause the solution to resist rain, evaporation, and runoff. Suitable stickers include, but are not limited to, emulsified polyethylenes, polymerized resins, fatty acids, and petroleum distillates.

In certain embodiments, the fungicidal formulations used in the invention contain an adjuvant or additive selected from the group of oils. Oils can be used as suffocates, which cut off the air supply to an insect, or as penetrants, which break apart chitin layers, thereby causing insects to die. Oils can also be used like surfactants, forming a film over a leaf and allowing the formulation to enter the plant. Suitable oils include, but are not limited to: crop oils, which are derived from soybeans or other crops; and inorganic oils, which are derived from petroleum. Oils can also be blended with surfactants.

In certain embodiments, the fungicidal formulations used in the invention contain an adjuvant or additive selected from the group of modified sugars, such as alkyl polyglucosides, which have surfactant-like properties and can be used as spreaders or stickers. These modified sugars are organic, biodegradable, and environmentally friendly. These modified sugars can be low-foaming or high-foaming, and can be used as wetting agents. Beneficially, such modified sugars have very low potential for phytotoxicity because they are derived from plant sugars. The formulations may include one or more natural surfactants other than, or in addition to, alkylated sugars. Suitable natural surfactants include, but are not limited to, coconut oils, palm oils, castor oils, lanolins, and wheat amino acids.

In certain embodiments, the fungicidal formulations used in the invention contain an adjuvant or additive selected from the group of organosilicates, which are good surfactants and have significant wetting abilities. Suitable organosilicates include, but are not limited to: methyl silicate; ethyl silicate; methylethyl silicate; methylpropyl silicate; and combinations thereof. Inorganic salts are also suitable surfactants, and include, but are not limited to: salts of sodium; potassium; ammonium; calcium; iron; zinc; and magnesium.

Various other additives may be present in the present fungicidal formulations. For example, the formulations may further include one or more preservatives, plant nutrients, biosupplements, fertilizers, and the like. Such additives may directly or indirectly benefit plant growth, hardiness, yield, or quality. Examples of suitable biosupplements include, but are not limited to, sea plant extracts, animal manures, animal-derived products, paper processing by-products, and compost material obtained by microbial metabolism. Furthermore, the formulations may be supplemented with one or more synthetically produced flavonoids.

The fungicidal formulations used in the present disclosure may include or more other pesticidal agent. The additional pesticidal agent can be any one or combination of herbicides, algicides, avicides, bactericides, fungicides, insecticides, miticides, molluscicides, miticides, microbial pesticides, ovicides, nematicides, rodenticides, virucides, antifouling agents, or desiccants. Suitable, non-limiting examples include Eucalyptus formulations, Callistemon formulations, Bacillus thuringiensis-Kurstakii insecticides or larvicides, Beauveria bassiana insecticides, Metarhizium anisoplae insecticides, Verticillium lecanii insecticides, Paceliomyce-based nematicides, Spodoptera Nucleopolyhedrovirus insecticides, Pseudomonas fluorescens fungicides, Tricoderma viridae fungicides, Trichoderma harzianum fungicides, HaNPV-based insecticides, amino acid-type herbicides, Carbendazim, Mancozeb, Ridomil, Dithane M-45, Chlorothalanil, Propaconazole, Spinosad, Novaluron, Indoxacarb, Thiomethoxam, Actamiprid, Imidocloprid, Chlorpyriphos, Avermectin, 2,4-dichlorophenoxy acetic acid, acephate, acetamiprid, alachlor, allethrin, alphacypermethrin, alphanaphthyl acetic acid, aluminium phosphide, anilophos, atrazine, aureofungin, azadirachtin, azoxystrobin, bacillus thuringiensis, bacillus thuringiensis, barium carbonate, beavreria bassiana, bendiocarb, benfuracarb, benomyl, bensulfuron, beta cyfluthrin, bifenazate, bifenthrin, bitertanol, bromadiolone, buprofezin, butachlor, captan, carbaryl, carbofuran, carbosulfan, carboxin, carfentazone ethyl, carpropamid, cartap hydrochloride, chlorofenvinphos, chlorfenapyr, chlorimuron ethyl, chlormequat chloride (ccc), chlorothalonil, chlorpyriphos, chlorpyriphos methyl, cinmethylene, clodinafop-propargyl (pyroxofop-propargyl), clomazone chlothianidin, copper hydroxide, copper oxychloride, copper sulfate, coumachlor, coumatetralyl, cuprous oxide, cyfluthrin, cyhalofop-butyl, cymoxanil, cypermethrin, cyphenothrin, dazomet, deltamethrin (decamethrin), diazinon, dichloro-diphenyl-trichloroethane, a dichloropropene and dichloropropane mixture, diclorvos, diclofop-methyl, dicofol, difenocenazole, difenthiuron, diflubenzuron, dimethoate, dimethomorph, dinocap, dithianon, diuron, dodine, d-trans allethrin, edifenphos, emamectin benzoate, endosulfan, ethephon, ethion, ethofenprox (etofenprox), ethoxysulfuron, an ethylene dibromide and carbon tetrachloride mixture, fenamidone, fenarimol, fenazaquin, fenitrothion, fenobucarb (bpmc), fenoxaprop-p-ethyl, fenpropathrin, fenpyroximate, fenthion, fenvalerate, fipronil, flubendiamide, fluchloralin, flufenacet, flufenoxuron, flufenzine, flusilazole, fluvalinate, forchlorfenuron, fosetyl-al, gibberellic acid, glufosinate ammonium, glyphosate, hexaconazole, hexazinone, hexythiazox, hydrogen cyanamid, imazethapyr, imidacloprid, imiprothrin, indoxacarb, iprobenfos (kitazin), iprodione, isoprothiolane, isoproturon, kasugamycin, lambdacyhalothrin, lime sulphur, lindane, linuron, lufenuro/n, magnesium phosphide plates, malathion, mancozeb, mepiquate chloride, mesosulfuron methyl and iodosulfuron methyl sodium, metalaxyl, metalaxyl-m, metaldehyde, methabenzthiazuron, methomyl, methoxy ethyl mercury chloride, methyl bromide, methyl chlorophenoxy acetic acid, methyl parathion, metiram, metolachlor, metribuzin, metsulfuron methyl, milbemectin, monocrotophos, myclobutanil, novaluron, nuclear polyhyderosis virus of helicoverpa armigera, nuclear polyhyderosis virus of spodoptera litura, oxadiargyl, oxadiazon, oxycarboxin, oxydemeton-methyl, oxyfluorfen, paclobutrazole, paraquat dichloride, penconazole, pencycuron, pendimethalin, permethrin, phenthoate, phorate, phosalone, phosphamidon, prallethrin, pretilachlor, primiphos-methyl, profenophos, propanil, propergite, propetamphos, propiconazole, propineb, propoxur, pyrachlostrobin, pyrethrins (pyrethrum), pyridalyl, pyriproxyfen, pyrithiobac sodium, quinalphos, quizalofop ethyl, quizalofop-p-tefuryl, s-bioallethrin, sirmate, sodium cyanide, spinosad, streptomycin and tetracycline, sulfosulfuron, sulphur, tebuconazole, temephos, thiacloprid, thifluzamide, thiobencarb (benthiocarb), thiodicarb, thiomethoxain, thiometon, thiophanate-methyl, thiram, transfluthrin, triacontanol, triadimefon, triallate, triazophos, trichlorofon, trichoderma viride, tricyclazole, tridemorph, trifluralin, validamycin, verticillium lecanii, zinc phosphide, zineb, and ziram.

In a particularly preferred embodiment, the fungicidal formulation used has the form of an aqueous solution comprising:
a) 55 - 99.9 wt%, preferably 90 - 99.9 wt.%, of water;
b) 0.001 - 1 wt%, preferably 0.01 - 0.05 wt.%, of sesquiterpene lactones;
c) 0 - 8 wt%, preferably 0 - 1 wt.%, of a cosolvent;
d) 0 - 2 wt%, preferably 0 - 1.5 wt.%, of a surfactant

As will be understood by those skilled in the art, it is customary in the art to provide fungicidal (or, more generally, pesticidal) compositions in a dry or concentrated form in order to facilitate packaging, storage, transportation and handling thereof, prior to application on crop. Such dry or concentrated compositions should be easy to disperse in a carrier liquid, typically plain tap water, to provide the fungicidal formulation in a 'ready-to-use' form, comprising the i) a chicory extract containing one or more sesquiterpene lactones, ii) the liquid carrier and iii) one or more adjuvants or additives at the levels as defined herein before.

Thus, in embodiments of the invention, compositions are provided in a dry solid form comprising i) a chicory extract containing one or more sesquiterpene lactones in admixture with iii) one or more adjuvants or additives such as, but not limited to: surfactants; wetting agents; thickening agents; spreaders; stickers; oils; anti-foaming materials; buffering agents; compatibility agents; nutrients; fertilizers; and growth enhancing agents. Exemplary dry solid forms include, granulates, powders, tablets, briquettes, or pastes, that can be readily dispersed in water for spray applications, and can be applied using standard machinery. As will be understood, on the basis of the foregoing, such compositions can have widely varying amounts of dry solids. More in particular, compositions are envisaged substantially consisting of the combination of the chicory extract and the one or more adjuvants or additives, which compositions are typically intended for use after dispersing in water. In an embodiment of the invention, compositions as defined herein are provided, formulated as a dry solid comprising i) the chicory extract and iii) the one or more adjuvants or additives in a combined amount of at least 75 wt.%, based on the total weight of the dry solid composition, more preferably in a combined amount of at least 80 wt.%, most preferably in a combined amount of at least 90 wt.%. In an embodiment of the invention, the dry solid composition consists substantially or entirely of the combination.

In other embodiments of the invention, compositions are provided in the form of a liquid concentrate comprising i) a chicory extract containing one or more sesquiterpene lactones, ii) one or more adjuvants or additives and iii) a liquid carrier and, which concentrate can be readily diluted with water for spray applications, and can be applied using standard machinery. In an embodiment of the invention, a liquid concentrate as defined herein is provided, comprising the combination of i) the chicory extract and ii) the one or more adjuvants or additives in a combined amount of at least at least 20 wt.%, based on the total weight of the liquid concentrate, more preferably in a combined amount of at least 40 wt.%, most preferably in a combined amount of at least 50 wt.%.

In a preferred embodiment, the fungicidal formulation is produced by a process comprising the consecutive steps of:
a) providing a chicory plant material;
b) contacting the chicory plant material with an extraction solvent chosen from the group consisting of water, methanol, ethanol, ethyl acetate, and combinations thereof, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract;
d) optionally subjecting the chicory extract obtained in step c) to one or more further steps resulting in further purification and/or concentration thereof; and
e) diluting the chicory extract obtained in step c) or d) with a carrier liquid as defined hereinbefore, wherein one or more adjuvants or additives as defined hereinbefore are optionally added prior to or after dilution.

In a very preferred embodiment, the fungicidal formulation is produced by a process comprising the consecutive steps of:
a) providing a chicory plant material;
b) contacting the chicory plant material with an extraction solvent chosen from the group consisting of water, methanol, ethanol, ethyl acetate, and combinations thereof, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract;
d) subjecting the chicory extract obtained in step c) to one or more filtration steps and a concentration step to obtain a chicory extract having a dry solids content of 5 wt.% or more, based on the total weight of the chicory extract, preferably a dry solids content of 10 wt.% or more, such as 20 wt.% or more, 50 wt.% or more, 90 wt.% or more and 98 wt.% or more; and
e) diluting the chicory extract obtained in step d) with a carrier liquid as defined hereinbefore, wherein one or more adjuvants or additives as defined hereinbefore are optionally added prior to or after dilution.

In preferred embodiments, the chicory extract obtained in step c) or d) is a chicory extract as defined hereinbefore.

The carrier liquid is preferably selected from the group consisting of water and mixtures of water with a co-solvent such as methanol or ethanol. Most preferably, the carrier liquid in step e) is water. Preferred conditions are as defined hereinbefore.

In preferred embodiments, the one or more adjuvants or additives are selected from the group consisting of surfactants, wetting agents, thickeners, spreaders, stickers, emulsifiers, oils, modified sugars, defoamers, organosilicates, buffering agents, preservatives, compatibility agents, plant nutrients, biosupplements, fertilizers, pesticidal agents and growth enhancing agents.

As already stated herein before, the invention concerns the use of a chicory extract obtainable by the processes as defined hereinbefore, comprising one or more sesquiterpene lactones as defined herein, preferably in the form of a fungicidal formulation obtainable by the processes as defined herein, as a fungicide on crops.

Accordingly, the invention concerns in an aspect the use of a chicory extract obtainable by a process comprising the consecutive steps of:
a) providing a chicory plant material;
b) contacting the chicory plant material with an extraction solvent chosen from the group consisting of water, methanol, ethanol, ethyl acetate, and combinations thereof, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract; and
d) optionally subjecting the chicory extract obtained in step c) to one or more further steps resulting in further purification and/or concentration thereof,
as a fungicide on crops against fungal pathogens of the genus *Stemphylium,* preferably *Stemphylium beticola* sp, and/or as a fungicide on crops against fungal pathogens of the genus *Cercospora,* preferably *Cercospora beticola* sp.

A preferred embodiment concerns the use of a chicory extract obtainable by a process comprising the consecutive steps of:
a) providing a chicory plant material;
b) contacting the chicory plant material with an extraction solvent chosen from the group consisting of water, methanol, ethanol, ethyl acetate, and combinations thereof, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract; and
d) subjecting the chicory extract obtained in step c) to one or more filtration steps and a concentration step to obtain a chicory extract having a dry solids content of 5 wt.% or more, based on the total weight of the chicory extract, preferably a dry solids content of 10 wt.% or more, such as 20 wt.% or more, 50 wt.% or more, 90 wt.% or more and 98 wt.% or more,
as a fungicide on crops against fungal pathogens of the genus *Stemphylium,* preferably *Stemphylium beticola* sp, and/or as a fungicide on crops against fungal pathogens of the genus *Cercospora,* preferably *Cercospora beticola* sp.

The invention concerns in a further aspect the use of a fungicidal formulation obtainable by a process comprising the consecutive steps of:
a) providing a chicory plant material;
b) contacting the chicory plant material with an extraction solvent chosen from the group consisting of water, methanol, ethanol, ethyl acetate, and combinations thereof, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract;
d) optionally subjecting the chicory extract obtained in step c) to one or more further steps resulting in further purification and/or concentration thereof; and
e) diluting the chicory extract obtained in step c) or d) with a carrier liquid as defined hereinbefore, wherein one or more adjuvants or additives as defined hereinbefore are optionally added prior to or after dilution,
as a fungicide on crops against fungal pathogens of the genus *Stemphylium,* preferably *Stemphylium beticola* sp, and/or as a fungicide on crops against fungal pathogens of the genus *Cercospora,* preferably *Cercospora beticola* sp.

A preferred embodiment concerns the use of a fungicidal formulation obtainable by a process comprising the consecutive steps of:
a) providing a chicory plant material;
b) contacting the chicory plant material with an extraction solvent chosen from the group consisting of water, methanol, ethanol, ethyl acetate, and combinations thereof, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract;
d) subjecting the chicory extract obtained in step c) to one or more filtration steps and a concentration step to obtain a chicory extract having a dry solids content of 5 wt.% or more, based on the total weight of the chicory extract, preferably a dry solids content of 10 wt.% or more, such as 20 wt.% or more, 50 wt.% or more, 90 wt.% or more and 98 wt.% or more; and
e) diluting the chicory extract obtained in step d) with a carrier liquid as defined hereinbefore, wherein one or more adjuvants or additives as defined hereinbefore are optionally added prior to or after dilution,
as a fungicide on crops against fungal pathogens of the genus *Stemphylium,* preferably *Stemphylium beticola* sp, and/or as a fungicide on crops against fungal pathogens of the genus *Cercospora,* preferably *Cercospora beticola* sp.

A further aspect of the invention concerns a process for preventing and/or controlling fungal infestation of crops, said process comprising treating the crops with a chicory extract obtainable by the processes as defined hereinbefore, comprising one or more sesquiterpene lactones as defined herein, preferably in the form of a fungicidal formulation obtainable by the processes as defined herein.

Accordingly, in an aspect the invention concerns a process for preventing and/or controlling fungal infestation of crops with pathogens of the genus *Stemphylium,* preferably *Stemphylium beticola* sp, and/or for preventing and/or controlling fungal infestation of crops with pathogens of the genus *Cercospora,* preferably *Cercospora beticola* sp., said process comprising treating the crops with an extract obtainable by a process comprising the consecutive steps of:
a) providing a chicory plant material;
b) contacting the chicory plant material with an extraction solvent chosen from the group consisting of water, methanol, ethanol, ethyl acetate, and combinations thereof, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract; and
d) optionally subjecting the chicory extract obtained in step c) to one or more further steps resulting in further purification and/or concentration thereof.

A preferred embodiment concerns a process for preventing and/or controlling fungal infestation of crops with pathogens of the genus *Stemphylium,* preferably *Stemphylium beticola* sp, and/or for preventing and/or controlling fungal infestation of crops with pathogens of the genus *Cercospora,* preferably *Cercospora beticola* sp., said process comprising treating the crops with an extract obtainable by a process comprising the consecutive steps of:
a) providing a chicory plant material;
b) contacting the chicory plant material with an extraction solvent chosen from the group consisting of water, methanol, ethanol, ethyl acetate, and combinations thereof, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract; and
d) subjecting the chicory extract obtained in step c) to one or more filtration steps and a concentration step to obtain a chicory extract having a dry solids content of 5 wt.% or more, based on the total weight of the chicory extract, preferably a dry solids content of 10 wt.% or more, such as 20 wt.% or more, 50 wt.% or more, 90 wt.% or more and 98 wt.% or more.

The invention concerns in a further aspect a process for preventing and/or controlling fungal infestation of crops with pathogens of the genus *Stemphylium,* preferably *Stemphylium beticola* sp, and/or for preventing and/or controlling fungal infestation of crops with pathogens of the genus *Cercospora,* preferably *Cercospora beticola* sp., said process comprising treating the crops with a fungicidal formulation obtainable by a process comprising the consecutive steps of:
a) providing a chicory plant material;
b) contacting the chicory plant material with an extraction solvent chosen from the group consisting of water, methanol, ethanol, ethyl acetate, and combinations thereof, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract;
d) optionally subjecting the chicory extract obtained in step c) to one or more further steps resulting in further purification and/or concentration thereof; and
e) diluting the chicory extract obtained in step c) or d) with a carrier liquid as defined hereinbefore, wherein one or more adjuvants or additives as defined hereinbefore are optionally added prior to or after dilution.

A preferred embodiment concerns a process for preventing and/or controlling fungal infestation of crops with pathogens of the genus *Stemphylium,* preferably *Stemphylium beticola* sp, and/or for preventing and/or controlling fungal infestation of crops with pathogens of the genus *Cercospora,* preferably *Cercospora beticola* sp., said process comprising treating the crops with a fungicidal formulation obtainable by a process comprising the consecutive steps of:
a) providing a chicory plant material;
b) contacting the chicory plant material with an extraction solvent chosen from the group consisting of water, methanol, ethanol, ethyl acetate, and combinations thereof, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract;
d) subjecting the chicory extract obtained in step c) to one or more filtration steps and a concentration step to obtain a chicory extract having a dry solids content of 5 wt.% or more, based on the total weight of the chicory extract, preferably a dry solids content of 10 wt.% or more, such as 20 wt.% or more, 50 wt.% or more, 90 wt.% or more and 98 wt.% or more; and
e) diluting the chicory extract obtained in step c) with a carrier liquid as defined hereinbefore, wherein one or more adjuvants or additives as defined hereinbefore are optionally added prior to or after dilution.

In accordance with the invention, these uses and processes preferably concern the treatment of crops including sugar beet, potato, wheat, beet root, spinach, most preferably sugar beet.

In accordance with the invention, these uses and processes preferably concern treatments aimed at prevention, control, eradication, extermination and/or, inactivation of fungal infestation.

The uses and processes of the invention concern treatments against fungal pathogens of the genus *Stemphylium* and/or against fungal pathogens of the genus *Cercospora,* in particular against *Stemphylium beticola* sp. and/or *Cercospora beticola* sp.

The extract or formulation may be applied according to a variety of regimens, depending e.g. on the risk and/or severity of fungal infestation. In an embodiment, the chicory extract or fungicidal formulation is applied onto the crops in an amount providing between 0.0001 and 35 gram of sesquiterpene lactones per hectare, more preferably in an amount of between 0.001 and 1 gram of sesquiterpene lactones per hectare, more preferably in an amount of between 0.005 and 0.1 gram of sesquiterpene lactones per hectare, more preferably in an amount of between 0.01 and 0.05 gram of sesquiterpene lactones per hectare, most preferably in an amount of between 0.01 and 0.02 gram of sesquiterpene lactones per hectare.

In another embodiment, the chicory extract or fungicidal formulation is applied onto the crops in an amount providing between 0.0001 and 35 gram of chicory extract per hectare, more preferably in an amount of between 0.001 and 1 gram of chicory extract per hectare, more preferably in an amount of between 0.005 and 0.1 gram of chicory extract per hectare, more preferably in an amount of between 0.01 and 0.05 gram of chicory extract per hectare, most preferably in an amount of between 0.02 and 0.05 gram of chicory extract per hectare.

In a very preferred embodiment, the chicory extract or fungicidal formulation is applied onto the crops in an amount providing between 0.01 and 35 gram of sesquiterpene lactones per hectare, more preferably in an amount of between 0.02 and 10 gram of sesquiterpene lactones per hectare, more preferably in an amount of between 0.04 and 5 gram of sesquiterpene lactones per hectare, more preferably in an amount of between 0.06 and 4 gram of sesquiterpene lactones per hectare, most preferably in an amount of between 0.08 and 3 gram of sesquiterpene lactones per hectare, such as between 0.10 and 2.7 gram of sesquiterpene lactones per hectare, between 0.20 and 2 gram of sesquiterpene lactones per hectare and between 0.50 and 1.5 gram of sesquiterpene lactones per hectare.

In preferred embodiments, the uses and processes of the invention concern treatments wherein a fungicidally effective amount of the chicory extract or formulation is applied onto the crops for the first time when the plant shows visible signs of infestation by foliar fungi, more preferably visible signs of infestation by *Stemphylium beticola* and or *Cercospora beticola.* In particularly preferred embodiments of the invention, the uses and processes of the invention concern treatments wherein a fungicidally effective amount of the chicory extract or fungicidal formulation is applied onto the crops 1, 2, 3 or 4 times per month. In particularly preferred embodiments, the uses and processes concern treatments wherein the chicory extract or fungicidal formulation is applied to the locus of the fungus, or to a locus in which the infestation is to be prevented. For example, the chicory extracts or fungicidal formulations may be applied to the roots, seeds or foliage of plants for the control of fungi.

The chicory extract or fungicidal formulation may be applied by any of a variety of known techniques. In particularly preferred embodiments of the invention, the present uses and processes preferably concern treatments wherein the chicory extract or fungicidal formulation is sprayed, for example with spraying booms on the field.

Except in the examples, or where otherwise expressly indicated, all numerical quantities in this description indicating amounts of material or conditions of reaction and/or use are to be understood as modified by the word "about" in describing the broadest scope of the invention. Practice within the numerical limits stated is generally preferred. Also, unless expressly stated to the contrary: percent, "parts of," and ratio values are by weight; the description of a group or class of materials as suitable or preferred for a given purpose in connection with the invention implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed; the first definition of an acronym or other abbreviation applies to all subsequent uses herein of the same abbreviation and applies mutatis mutandis to normal grammatical variations of the initially defined abbreviation; and, unless expressly stated to the contrary, measurement of a property is determined by the same technique as previously or later referenced for the same property.

It is also to be understood that this invention is not limited to the specific embodiments and methods described below, as specific components and/or conditions may, of course, vary. Furthermore, the terminology used herein is used only for the purpose of describing particular embodiments of the present invention and is not intended to be limiting in any way.

It is also to be understood that, as used in the specification and the appended claims, the singular form "a," "an," and "the" comprise plural referents unless the context clearly indicates otherwise. For example, reference to a component in the singular is intended to comprise a plurality of components.

### BRIEF DESCRIPTION OF THE FIGURES

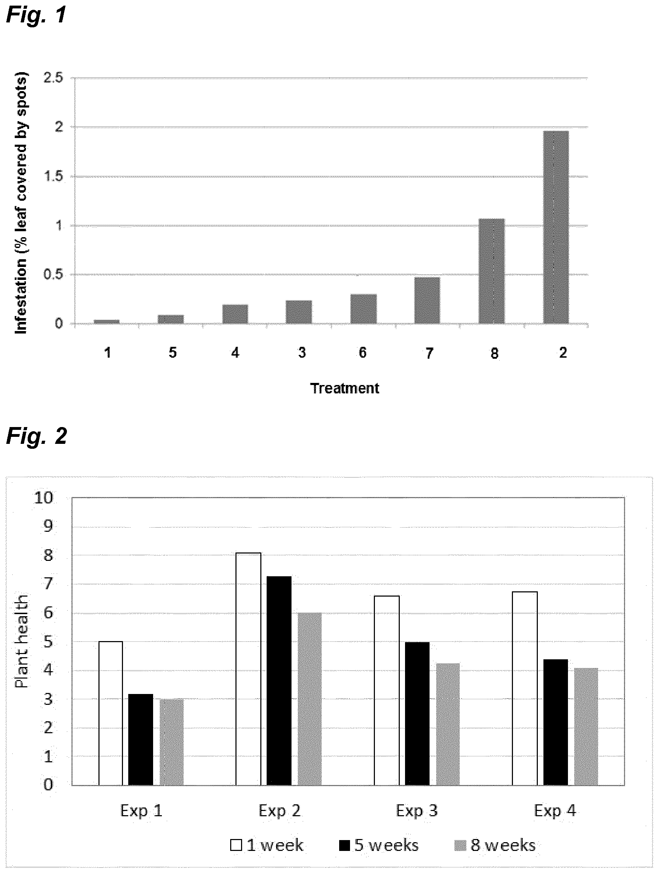

Figure 1 depicts the degree of infestation of sugar beet leaves inoculated with *Stemphylium beticola* treated with different known fungicides and with chicory extract comprising sesquiterpene lactones one week after inoculation.
Figure 2 depicts the plant health of sugar beet plants in the field that were infested with *Cercospora beticola* and that were not treated (reference), treated with a known commercial fungicide (comparative example) or treated with fungicidal formulations comprising a chicory extract according to the invention.

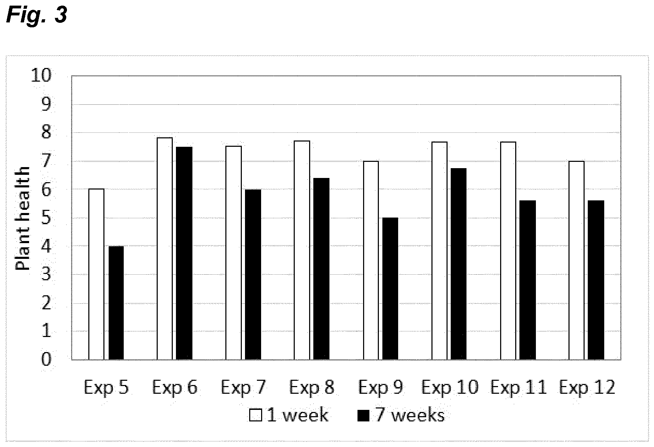

Figure 3 depicts the plant health of sugar beet plants in the field that were infested with *Stemphylium beticola* and *Cercospora beticola* and that were not treated (reference), treated with a known commercial fungicide (comparative example) or treated with fungicidal formulations comprising a chicory extract according to the invention.

### EXAMPLES

### Example 1: extraction of sesquiterpene lactones from chicory

### Example 1a: ethyl acetate extraction of sesquiterpene lactones from chicory

Whole chicory roots tubers were washed and sliced to obtain chicory root slices having an average size of a few centimeters. The chicory root slices were subsequently extracted using ethyl acetate of ca. 50°C. The extraction process extracts selectively and virtually all apolar components from the chicory root slices, including the sesquiterpene lactones. The composition of the extract obtained is shown in the below Table 1.

**Table 1**

| **Component** | **Concentration (mg/kg extract)** |
|---|---|
| dihydro-Lactucin | 51805 |
| Lactucin | 58026 |
| 8-deoxylactucin-15-oxalate | 779 |
| 8-deoxylactucin | 18295 |
| dihydro-8-deoxylactucin | 10076 |
| Lactucopicrin-15-oxalate | 33058 |
| dihydroxy Lactucopicrin-oxalate | 122570 |
| Dihydro-Lactucopicrin | 137324 |
| Lactucopicrin | 17161 |
| **Sum** | 449096 |

### Example 1b: ethyl acetate extraction of sesquiterpene lactones from chicory

Whole chicory roots tubers *(Cichorium intybus)* were washed and sliced to obtain chicory root slices having an average size of a few centimeters. The chicory root slices were subsequently extracted using ethyl acetate at a temperature of ca. 50°C using 10 liter of ethyl acetate per kg chicory root slices, during ca. 60 minutes. The liquid phase was subsequently subjected to filtration using a glass fiber filter (0.05 mm pore size, max. 0.5 bar overpressure) to remove solid particles and the permeate was concentrated using evaporation under vacuum to a dry solids content of about 12 wt.%, based on the total weight of the concentrated extract. The concentration step only reduced the amount of extraction solvent ethyl acetate in the resulting extract. The composition of the ethyl acetate chicory extract obtained is shown in the below Table 2.

**Table 2: composition ethyl acetate chicory extract**

| **Component** | **Concentration** mg/[kg extract] | **Concentration** wt.% (based on sesq. lactones) | **Concentration** wt.% (based on extract) |
|---|---|---|---|
| dihydro-lactucin | 66442 | 56.2 | |
| Lactucin | 19947 | 16.9 | |
| 8-deoxylactucin-15-oxalate | 0 | 0 | |
| 8-deoxylactucin | 4996 | 4.2 | |
| dihydro-8-deoxylactucin | 14596 | 12.3 | |
| lactucopicrin-15-oxalate | 1349 | 1.1 | |
| dihydroxy lactucopicrin-oxalate | 4899 | 4.2 | |
| dihydro-lactucopicrin | 1047 | 0.9 | |
| lactucopicrin | 4937 | 4.2 | |
| total sesquiterpene lactones | 118213 | 100 | 11.8 |
| total sugars/inulin | 0 | | 0.0 |
| total minerals | 0 | | 0.0 |
| total polyphenols | 1954 | | 0.2 |
| total dry solids | 120167 | | 12.0 |
| total ethyl acetate | 879833 | | 88.0 |

### Example 1c: ethanol extraction of sesquiterpene lactones from chicory

Whole chicory roots tubers *(Cichorium intybus)* were washed and sliced to obtain chicory root slices having an average size of a few centimeters. The chicory root slices were subsequently extracted using ethanol at a temperature of ca. 50°C using 10 liter of ethanol per kg chicory root slices, during ca. 60 minutes. The liquid phase was subsequently subjected to filtration using a glass fiber filter (0.05 mm pore size, max. 0.5 bar overpressure) to remove solid particles and the permeate was concentrated using evaporation under vacuum to a dry solids content of about 78 wt.%, based on the total weight of the concentrated extract. The concentration step only reduced the amount of extraction solvent ethanol in the resulting extract. The composition of the ethanol chicory extract obtained is shown in Table 3.

**Table 3: composition ethanol chicory extract**

| **Component** | **Concentration** mg/[kg extract] | **Concentration** wt.% (based on sesq. lactones) | **Concentration** wt.% (based on extract) |
|---|---|---|---|
| dihydro-lactucin | 291 | 2.5 | |
| lactucin | 742 | 6.5 | |
| 8-deoxylactucin-15-oxalate | 488 | 4.3 | |
| 8-deoxylactucin | 426 | 3.7 | |
| dihydro-8-deoxylactucin | 70 | 0.6 | |
| lactucopicrin-15-oxalate | 2858 | 25.0 | |
| dihydroxy lactucopicrin-oxalate | 6286 | 54.9 | |
| dihydro-lactucopicrin | 45 | 0.4 | |
| lactucopicrin | 244 | 2.1 | |
| total sesquiterpene lactones | 11450 | 100 | 1.1 |
| total sugars/inulin | 749960 | | 75 |
| total minerals | 15945 | | 1.6 |
| total polyphenols | 3116 | | 0.3 |
| total dry solids | 780471 | | 78.0 |
| total ethanol | 219529 | | 22.0 |

### Example 1d: aqueous extraction of sesquiterpene lactones from chicory

Whole chicory roots tubers *(Cichorium intybus)* were washed and sliced to obtain chicory root slices having an average size of a few centimeters. The chicory root slices were subsequently extracted using water at a temperature of ca. 50°C using 10 liter of water per kg chicory root slices, during ca. 60 minutes. The liquid phase was subsequently subjected to filtration using a glass fiber filter (0.05 mm pore size, max. 0.5 bar overpressure) to remove solid particles and the permeate was concentrated using evaporation under vacuum to a dry solids content of about 63 wt.%, based on the total weight of the concentrated extract. The concentration step only reduced the amount of extraction solvent water in the resulting extract. The composition of the aqueous chicory extract obtained is shown in Table 4.

**Table 4: composition aqueous chicory extract**

| **Component** | **Concentration** mg/[kg extract] | **Concentration** wt.% (based on sesq. lactones) | **Concentration** wt.% (based on extract) |
|---|---|---|---|
| dihydro-lactucin | 466 | 4.6 | |
| lactucin | 1954 | 19.1 | |
| 8-deoxylactucin-15-oxalate | 439 | 4.3 | |
| 8-deoxylactucin | 897 | 8.8 | |
| dihydro-8-deoxylactucin | 149 | 1.5 | |
| lactucopicrin-15-oxalate | 2158 | 21.1 | |
| dihydroxy lactucopicrin-oxalate | 3818 | 37.3 | |
| dihydro-lactucopicrin | 15 | 0.1 | |
| lactucopicrin | 335 | 3.3 | |
| total sesquiterpene lactones | 10231 | 100 | 1.0 |
| total sugars/inulin | 567500 | | 56.8 |
| total minerals | 51350 | | 5.1 |
| total polyphenols | 2158 | | 0.2 |
| total dry solids | 631239 | | 63.1 |
| total water | 368761 | | 36.9 |

### Conclusion

As can be seen from Tables 2, 3 and 4, the extraction solvents having quite different polarity all result in chicory extracts containing sesquiterpene lactones and polyphenols. In case of ethyl acetate as extraction solvent, neither minerals nor sugars/inulin are co-extracted.

### Example 2: spore production and inoculation

Spores of *Stemphylium* were produced as follows. *Stemphylium* isolate GV 11-265a (*Stemphylium beticola*, Langenboom, Netherlands, isolated from the cultivar Isabella KWS) was transferred to petri dishes with a V8 medium. The fungus was allowed to grow for 4 weeks at a temperature of 18°C to produce spores. During these 4 weeks, the petri dishes were subjected to UV-light of 350 nm for 12 hours/day and were also placed in the dark for 12 hours/day. After the four-week period of spore production, the spores were harvested by adding 7 ml of sterile double distilled water per petri dish and by loosening the spores from the medium using a sterile microscope slide. The resulting aqueous spore suspension was collected and the coarse faction was removed using a metal sieve. The resulting aqueous spore suspension contained 5.5·10⁴ spores per ml.

Trays with sugar beet plants were either inoculated by spraying 5 ml of this aqueous spore suspension per tray or by spraying 5 ml of water per tray (reference). Directly after inoculation, the plants were covered with a plastic bag.

### Example 3: treatment of sugar beet plants with sesquiterpene lactones

All experiments were performed in a climatised plant growth room by IRS, Bergen op Zoom, The Netherlands. In this climate room, temperature, air humidity, CO₂ concentration, light intensity, air movement and watering could be regulated. The temperature was 23°C during the day (16 hours) and 16°C during the night (8 hours). The light intensity during the day (16 hours) was 20.000 lux.

In all experiments, 8 week old sugar beet plants were used. Plants of the cultivar Isabella KWS and of the cultivar Corvinia were used. The plants were positioned in trays with 10 plants of each cultivar.

Treatment of the plants took place one day after inoculation by spraying chicory extracts or known fungicides over the plants using a tractor equipped with a sprayer for field trials. This sprayer used compressed air, was equipped with eight spraying booms of each 3 meters wide, each having four Agrotop Venturi Airmix 110-03 flat fan venturi nozzles and each having one Teejet banding spray nozzle, type UB 85° 03, positioned at the end of the spraying boom. Four trays (repetitions, see table *infra)* were placed in a row under the central three flat fan venturi nozzles. There was a space between the individual trays such that there was at least 10 cm between the leaves of plants in different trays. One tray (no repetition, see table *infra)* for assessing potential phytotoxicity, was placed in the same row, but 30 cm apart from the nearest tray. During spraying, the tractor drove with a speed of approximately 1.8 km/hr so as to obtain a good covering of the plants with the fungicide. Directly after spraying, the plants were covered with a new plastic bag, supported by two iron arches.

The treatments were performed using water, the chicory extracts comprising sesquiterpene lactones as obtained in Example 1 in different concentrations in water or by using known fungicides Spyrale EC (from Syngenta Crop Protection B.V.), Retengo Plust (from BASF Nederland B.V.) or Signum (from BASF Nederland B.V.). These known fungicides are approved for use in arable cultivation in The Netherlands.

Table 5 lists the different experiments that were performed in the climate room.

**Table 5**

| **Test** | **Fungicide/chic. extract** | **Inoculation** | **Repet.** | **Description** |
|---|---|---|---|---|
| **1** | No | No | 4 | Control without fungicide/inoculation |
| **2** | No, water | Stemphylium (*) | 4 | Control without fungicide, with inoculation |
| **3** | Retengo Plust | Stemphylium | 4 | Reference 1 treatment with fungicide, with inoculation |
| **4** | Spyrale EC | Stemphylium | 4 | Reference 2 treatment with fungicide, with inoculation |
| **5** | Signum | Stemphylium | 4 | Reference 3 treatment with fungicide, with inoculation |
| **6** | Chicory extract, 0.038 wt.% | Stemphylium | 4 | Extract of Example 1, low concentration with fungicide, with inoculation |
| **7** | Chicory extract, 0.38 wt.% | Stemphylium | 4 | Extract of Example 1, medium concentration with fungicide, with inoculation |
| **8** | Chicory extract, 3.8 wt.% | Stemphylium | 4 | Extract of Example 1, high concentration with fungicide, with inoculation |
| **9** | Retengo Plust | No | 1 | Reference 1 treatment with fungicide, without inoculation, control for phytotoxicity |
| **10** | Spyrale EC | No | 1 | Reference 2 treatment with fungicide, without inoculation, control for phytotoxicity |
| **11** | Signum | No | 1 | Reference 3 treatment with fungicide, without inoculation, control for phytotoxicity |
| **12** | Chicory extract, 0.038 wt.% | No | 1 | Extract of Example 1, low concentration with fungicide, without inoculation, control for phytotoxicity |
| **13** | Chicory extract, 0.38 wt.% | No | 1 | Extract of Example 1, medium concentration, without fungicide inoculation, control for phytotoxicity |
| **14** | Chicory extract, 3.8 wt.% | No | 1 | Extract of example 1, high concentration, with fungicide, without inoculation, control for phytotoxicity |

| | | | | |
|---|---|---|---|---|
| (*) *Stemphylium* isolate GV 11-265a (*Stemphylium beticola,* Langenbaum, Netherlands, isolated from the cultivar Isabelle KWS) | | | | |

One to two weeks post inoculation, the plastic was removed from the plants and the degree of infestation of the leaves was assessed in accordance with the method of the European Plant Pathology Organisation (EPPO) as laid down in 'Efficacy evaluation of fungicides; Foliar diseases of sugar beet', PP1/001(4), EPPO Bulletin, 2003, 33(1), pp 5-10, by determining the percentage of the surface area of the leaves covered by spots. The statistical analysis of the results was performed using the program Genstat (16^{th} Edition) to perform Linear Mixed Models analyses.

One to two weeks after inoculation, every sugar beet plant inoculated with *Stemphylium* contained necrotic spots on the leaves. None of the fungicides tested without inoculation resulted in phytotoxicity. One week after inoculation, differences between different trays and between trays treated differently were clearly visible. The results of the analysis are schematically depicted in Figure 1. The value on the vertical axis represents the percentage of the surface of the leaves covered with spots. There was a significant difference between the cultivar Isabella KWS and the cultivar Corvinia (not shown in Figure 1). Isabella KWS showed higher infestation levels. Both cultivars were found to be susceptible to *Stemphylium* in the field. It is hypothesized that the difference originates in the fact that the used *Stemphylium* isolate was obtained from the cultivar Isabella KWS.

The tray that was inoculated with *Stemphylium* and was treated with water one day after inoculation (treatment **2**) showed the highest degree of infestation of the leaves, significantly more than any other tray. The trays inoculated with *Stemphylium* and treated with the known fungicides Retengo Plust, Spyrale EC or Signum one day after inoculation (treatments **3**, **4** and **5**, respectively) showed the lowest degree of infestation, and did not differ in a statistically significant way. The trays inoculated with *Stemphylium* and treated with Chicory extract 0.038 wt.% (treatment **6**) showed a degree of infestation that did not differ in a statistically significant way from the results obtained with the known fungicides Retengo Plust. Spyrale EC or Signum one day after inoculation (treatments **3**, **4** and **5**, respectively). The trays inoculated with *Stemphylium* and treated with Chicory extract 0.38 wt.% (treatment **7**) showed a degree of infestation that did not differ in a statistically significant way from the results obtained with Chicory extract 0.038 wt.% (treatment **6**). However, the degree of infestation obtained with Chicory extract 0.38 wt.% (test **7**) did differ in a statistically significant way from the results obtained with the known fungicides (treatment **3**, **4** and **5**) and the tray which was used as control (treatment **1**). The trays inoculated with *Stemphylium* and treated with Chicory extract 3.8 wt.% (treatment **8**) showed a degree of infestation that was significantly higher than the degree of infestation obtained with the other Chicory extracts (treatments **6** and **7**) and with the known fungicides (treatments **3**, **4** and **5**). However, the degree of infestation obtained with Chicory extract 0.38 wt.% (treatment **7**) did also differ in a statistically significant way from the results obtained with water one day after inoculation (treatment **2**).

Hence, of the chicory extracts tested, the extract with the lowest concentration of sesquiterpene lactones (treatment **6**), when applied in an amount of 10 liter/ha, showed the best fungicidal activity against *Stemphylium* and had similar fungicidal activity to the known fungicides when applied in an amount of 1 liter/ha or kg/ha, their registered dose, diluted in 300 L water/ha.

### Example 4: treatment of Cercospora infection

This example concerns a test in the field (Valthermond, The Netherlands) from May until October 2018. Infestation of sugar beet leaves in the field was analyzed for pathogenic species. It was concluded that the_sugar beet plants were infested with *Cercospora beticola.*

Treatment of the plants took place 5 times during the period of observance (when considered necessary on visual inspection) by spraying fungicidal formulations onto the sugar beet plants. Fungicidal formulations obtained by diluting the aqueous chicory extract obtained in Example 1d with water were used. As a comparative example, sugar beet plants were sprayed with commercial fungicides at the recommended dose (2 times Retengo Plust, 1 time Spyrale EC and 2 times Sphere). As a reference, sugar beet plants that were not treated with a fungicidal formulation were observed. Table 6 lists the amount of sesquiterpene lactones applied per hectare.

**Table 6**

| Experiment No. | Extract or fungicide | Carrier liquid | Ratio extract: carrier liquid in fungicidal formulation [kg/kg] | Dose of applied [liter fungicidal formulation / hectare] | Dose applied [gram sesquiterpene lactone / hectare] |
|---|---|---|---|---|---|
| Exp 1 (ref) | no treatment | - | - | - | - |
| Exp 2 (comparative) | commercial fungicides | water | | | recommended dose |
| Exp 3 | Example 1d | water | 1 : 17.60 | 1 | 0.55 |
| Exp 4 | Example 1d | water | 1 : 17.60 | 5 | 2.75 |

Plant health was evaluated 1 week after the first treatment with fungicide, 5 weeks after and 8 week after. The results are shown in Figure 2. The y-axis value depicts the plant health (1 = plant dead, 10 = plants completely healthy). Figure 2 shows that the formulations based on chicory extracts (Exp 3 and Exp4) have fungicidal activity against *Cercospora sp.* on sugar beet plants.

### Example 5: treatment of combined Stemphylium and Cercospora infection

This example concerns a test in the field (Vredepeel, The Netherlands) from May until November 2018. Infestation of sugar beet leaves in the field was analyzed for pathogenic species. It was concluded that the sugar beet plants were infested with *Stemphylium beticola* and with *Cercospora beticola.*

Treatment of the plants took place 4 times during the period of observance (when considered necessary on visual inspection) by spraying fungicidal formulations onto the sugar beet plants. Fungicidal formulations obtained by diluting the chicory extracts obtained in Examples 1b, 1c and 1d with water were used. As a comparative example, sugar beet plants were sprayed with commercial fungicides at the recommended dose (1 time Opus Team, 1 time Spyrale EC, 1 time Difure Pro and again 1 time Opus Team). As a reference, sugar beet plants that were not treated with a fungicidal formulation were observed. Table 7 lists the amount of sesquiterpene lactones applied per hectare.

**Table 7**

| Experiment No. | Extract or fungicide | Carrier liquid | Ratio extract : carrier liquid in fungicidal formulation [kg/kg] | Dose applied [liter fungicidal formulation / hectare] | Dose applied [gram sesq. lactone / hectare] |
|---|---|---|---|---|---|
| Exp 5 (ref) | no treatment | - | - | - | - |
| Exp 6 (comp.) | commercial fungicides | water | | | recommended dose |
| Exp 7 | Example 1c | water+ Sisterna SP70 | 1 : 113.5 | 1 | 0.10 |
| Exp 8 | Example 1c | water+ Sisterna SP70 | 1 : 113.5 | 5 | 0.50 |
| Exp 9 | Example 1b | water+ Sisterna SP70 | 1 : 513.0 | 1 | 0.23 |
| Exp 10 | Example 1b | water+ Sisterna SP70 | 1 : 222.9 | 5 | 2.64 |
| Exp 11 | Example 1d | water | 1 : 50.16 | 1 | 0.20 |
| Exp 12 | Example 1d | water | 1 : 50.16 | 5 | 1.00 |

Plant health was evaluated 1 week after the first treatment with fungicide and 7 weeks after. The results are shown in Figure 3. The y-axis value depicts the plant health (1 = plant dead, 10 = plants completely healthy). Figure 3 shows that the formulations based on chicory extracts (Exp 7 - Exp 12) have fungicidal activity against *Cercospora* sp. *and Stemphylium* sp. on sugar beet plants.

## Claims

1. Use of a chicory extract obtainable by a process comprising the consecutive steps of:
a) providing a chicory plant material;
b) contacting the chicory plant material with an extraction solvent chosen from the group consisting of water, methanol, ethanol, ethyl acetate, and combinations thereof, preferably chosen from the group consisting of water, ethanol or ethyl acetate, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract; and
d) optionally subjecting the chicory extract obtained in step c) to one or more further steps resulting in further purification and/or concentration thereof,
as a fungicide on crops against fungal pathogens of the genus *Stemphylium,* preferably *Stemphylium beticola* sp, and/or as a fungicide on crops against fungal pathogens of the genus *Cercospora,* preferably *Cercospora beticola* sp.

2. Use of a of a chicory extract according to claim 1, obtainable by a process according to claim 1, wherein said process comprising the consecutive steps of:
a) providing a chicory plant material;
b) contacting the chicory plant material with an extraction solvent chosen from the group consisting of water, methanol, ethanol, ethyl acetate, and combinations thereof, preferably chosen from the group consisting of water, ethanol or ethyl acetate, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract; and
d) subjecting the chicory extract obtained in step c) to one or more filtration steps and a concentration step to obtain a chicory extract having a dry solids content of 5 wt.% or more, based on the total weight of the chicory extract, preferably a dry solids content of 10 wt.% or more.

3. Use of a fungicidal formulation obtainable by a process comprising the consecutive steps of:
a) providing a chicory plant material;
b) contacting the chicory plant material with an extraction solvent chosen from the group consisting of water, methanol, ethanol, ethyl acetate, and combinations thereof, preferably chosen from the group consisting of water, ethanol or ethyl acetate, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract;
d) optionally subjecting the chicory extract obtained in step c) to one or more further steps resulting in further purification and/or concentration thereof; and
e) diluting the chicory extract obtained in step c) or d) with a carrier liquid, wherein one or more adjuvants or additives are optionally added prior to or after dilution, wherein the carrier liquid is preferably selected from the group consisting of water and mixtures of water with a co-solvent such as methanol or ethanol, wherein the carrier liquid more preferably is water,
wherein the one or more adjuvants or additives are preferably selected from the group consisting of surfactants, wetting agents, thickeners, spreaders, stickers, emulsifiers, oils, modified sugars, defoamers, organosilicates, buffering agents, preservatives, compatibility agents, plant nutrients, biosupplements, fertilizers, pesticidal agents and growth enhancing agents,
as a fungicide on crops against fungal pathogens of the genus *Stemphylium,* preferably *Stemphylium beticola* sp, and/or as a fungicide on crops against fungal pathogens of the genus *Cercospora,* preferably *Cercospora beticola* sp.

4. Use of a of fungicidal formulation according to claim 3, obtainable by a process according to claim 3, wherein said process comprising the consecutive steps of:
a) providing a chicory plant material;
b) contacting the chicory plant material with an extraction solvent chosen from the group consisting of water, methanol, ethanol, ethyl acetate, and combinations thereof, preferably chosen from the group consisting of water, ethanol or ethyl acetate, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract;
d) subjecting the chicory extract obtained in step c) to one or more filtration steps and a concentration step to obtain a chicory extract having a dry solids content of 5 wt.% or more, based on the total weight of the chicory extract, preferably a dry solids content of 10 wt.% or more; and
e) diluting the chicory extract obtained in step d) with a carrier liquid, wherein one or more adjuvants or additives are optionally added prior to or after dilution, wherein the carrier liquid is preferably selected from the group consisting of water and mixtures of water with a co-solvent such as methanol or ethanol, wherein the carrier liquid more preferably is water
wherein the one or more adjuvants or additives are preferably selected from the group consisting of surfactants, wetting agents, thickeners, spreaders, stickers, emulsifiers, oils, modified sugars, defoamers, organosilicates, buffering agents, preservatives, compatibility agents, plant nutrients, biosupplements, fertilizers, pesticidal agents and growth enhancing agents.

5. Process for preventing and/or controlling fungal infestation of crops with pathogens of the genus *Stemphylium,* preferably *Stemphylium beticola* sp, and/or for preventing and/or controlling fungal infestation of crops with pathogens of the genus *Cercospora,* preferably *Cercospora beticola* sp., said process comprising treating the crops with an extract obtainable by a process comprising the consecutive steps of:
a) providing a chicory plant material;
b) contacting the chicory plant material with an extraction solvent chosen from the group consisting of water, methanol, ethanol, ethyl acetate, and combinations thereof, preferably chosen from the group consisting of water, ethanol or ethyl acetate, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract; and
d) optionally subjecting the chicory extract obtained in step c) to one or more further steps resulting in further purification and/or concentration thereof.

6. Process according to claim 5, wherein the extract is obtainable by a process comprising the consecutive steps of:
a) providing a chicory plant material;
b) contacting the chicory plant material with an extraction solvent chosen from the group consisting of water, methanol, ethanol, ethyl acetate, and combinations thereof, preferably chosen from the group consisting of water, ethanol or ethyl acetate, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract; and
d) subjecting the chicory extract obtained in step c) to one or more filtration steps and a concentration step to obtain a chicory extract having a dry solids content of 5 wt.% or more, based on the total weight of the chicory extract, preferably a dry solids content of 10 wt.% or more.

7. Process for preventing and/or controlling fungal infestation of crops with pathogens of the genus *Stemphylium,* preferably *Stemphylium beticola* sp, and/or for preventing and/or controlling fungal infestation of crops with pathogens of the genus *Cercospora,* preferably *Cercospora beticola* sp., said process comprising treating the crops with a fungicidal formulation obtainable by a process comprising the consecutive steps of:
a) providing a chicory plant material;
b) contacting the chicory plant material with an extraction solvent chosen from the group consisting of water, methanol, ethanol, ethyl acetate, and combinations thereof, preferably chosen from the group consisting of water, ethanol or ethyl acetate, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract;
d) optionally subjecting the chicory extract obtained in step c) to one or more further steps resulting in further purification and/or concentration thereof; and
e) diluting the chicory extract obtained in step c) or d) with a carrier liquid, wherein one or more adjuvants or additives are optionally added prior to or after dilution, wherein the carrier liquid is preferably selected from the group consisting of water and mixtures of water with a co-solvent such as methanol or ethanol, wherein the carrier liquid more preferably is water,
wherein the one or more adjuvants or additives are preferably selected from the group consisting of surfactants, wetting agents, thickeners, spreaders, stickers, emulsifiers, oils, modified sugars, defoamers, organosilicates, buffering agents, preservatives, compatibility agents, plant nutrients, biosupplements, fertilizers, pesticidal agents and growth enhancing agents.

8. Process according to claim 7, wherein the fungicidal formulation is obtainable by a process comprising the consecutive steps of:
a) providing a chicory plant material;
b) contacting the chicory plant material with an extraction solvent chosen from the group consisting of water, methanol, ethanol, ethyl acetate, and combinations thereof, preferably chosen from the group consisting of water, ethanol or ethyl acetate, preferably at a temperature between 15 and 70 °C, preferably for a period between 30 and 90 minutes, preferably using 1- 20 liters of extraction solvent per kg of chicory plant material;
c) separating the extraction solvent comprising dissolved sesquiterpene lactones from the particulate plant material resulting in a chicory extract;
d) subjecting the chicory extract obtained in step c) to one or more filtration steps and a concentration step to obtain a chicory extract having a dry solids content of 5 wt.% or more, based on the total weight of the chicory extract, preferably a dry solids content of 10 wt.% or more; and
e) diluting the chicory extract obtained in step c) with a carrier liquid, wherein one or more adjuvants or additives are optionally added prior to or after dilution, wherein the carrier liquid is preferably selected from the group consisting of water and mixtures of water with a co-solvent such as methanol or ethanol, wherein the carrier liquid more preferably is water,
wherein the one or more adjuvants or additives are preferably selected from the group consisting of surfactants, wetting agents, thickeners, spreaders, stickers, emulsifiers, oils, modified sugars, defoamers, organosilicates, buffering agents, preservatives, compatibility agents, plant nutrients, biosupplements, fertilizers, pesticidal agents and growth enhancing agents.

9. Use of a chicory extract or fungicidal formulation according to any one of claims 1 - 4, or process according to any one of claims 5 - 8, wherein the chicory extract or fungicidal formulation comprises:
• 5-25 wt.% of lactucin optionally in the form of an ester;
• 1-70 wt.% of 11,13-dihydrolactucin optionally in the form of an ester;
• 1-15 wt.%, of 8-deoxylactucin, optionally in the form of an ester;
• 0.5-20 wt.% of 11,13-dihydro-8-deoxylactucin, optionally in the form of an ester;
• 1-40 wt.% of lactucopicrin, optionally in the form of an ester; and
• 1-60 wt.%, of 11,13-dihydrolactucopicrin, optionally in the form of an ester;
wherein the weight percentages are based on the total amount of sesquiterpene lactones in the chicory extract or fungicidal formulation.

10. Use of a chicory extract or fungicidal formulation according to any one of claims 1 - 4, or process according to any one of claims 5 - 8, wherein the chicory extract or fungicidal formulation comprises:
• 5-40 wt.% of lactucin optionally in the form of an ester;
• 1-15 wt.% of 11,13-dihydrolactucin optionally in the form of an ester;
• 5-25 wt.%, of 8-deoxylactucin, optionally in the form of an ester;
• 0.5-10 wt.% of 11,13-dihydro-8-deoxylactucin, optionally in the form of an ester;
• 5-35 wt.% of lactucopicrin, optionally in the form of an ester; and
• 15-50 wt.%, of 11,13-dihydrolactucopicrin, optionally in the form of an ester;
wherein the weight percentages are based on the total amount of sesquiterpene lactones in the chicory extract or fungicidal formulation.

11. Use of a chicory extract or fungicidal formulation according to any one of claims 1 - 4, or process according to any one of claims 5 - 8, wherein the chicory extract or fungicidal formulation comprises:
• 1-15 wt.% of lactucin optionally in the form of an ester;
• 0.5-10 wt.% of 11,13-dihydrolactucin optionally in the form of an ester;
• 5-20 wt.%, of 8-deoxylactucin, optionally in the form of an ester;
• 0.05-5 wt.% of 11,13-dihydro-8-deoxylactucin, optionally in the form of an ester;
• 20-40 wt.% of lactucopicrin, optionally in the form of an ester; and
• 35-70 wt.%, of 11,13-dihydrolactucopicrin, optionally in the form of an ester;
wherein the weight percentages are based on the total amount of sesquiterpene lactones in the chicory extract or fungicidal formulation.

12. Use of a chicory extract or fungicidal formulation according to any one of claims 1 - 4and 9 - 11, or process according to any one of claims 5 - 11, wherein the chicory plant material is *Cichorium intybus.*

13. Use of a chicory extract or fungicidal formulation according to any one of claims 1 - 4 and 9 - 12, or process according to any one of claims 5 - 12, wherein the chicory extract or fungicidal formulation is applied onto the crops in an amount providing between 0.01 and 35 gram of sesquiterpene lactones per hectare, more preferably in an amount of between 0.02 and 10 gram of sesquiterpene lactones per hectare, more preferably in an amount of between 0.04 and 5 gram of sesquiterpene lactones per hectare, more preferably in an amount of between 0.06 and 4 gram of sesquiterpene lactones per hectare, most preferably in an amount of between 0.08 and 3 gram of sesquiterpene lactones per hectare.

14. Use of a chicory extract or fungicidal formulation according to any one of claims 1 - 4 and 9 - 13, or process according to any one of claims 5 - 13, wherein the crop is selected from the group consisting of sugar beet, potato, wheat, beet root and spinach, preferably sugar beet.

15. Use of a chicory extract or fungicidal formulation according to any one of claims 1 - 4 and 9 - 14, or process according to any one of claims 5 - 14, wherein the chicory extract or fungicidal formulation is applied onto the crops 1, 2, 3 or 4 times per month.

## Patentansprüche

1. Verwendung eines Zichorienextrakts, der durch ein Verfahren erhältlich ist, das die aufeinanderfolgenden Schritte umfasst:
a) Bereitstellen eines Zichorienpflanzenmaterials;
b) in Kontakt bringen des Zichorienpflanzenmaterials mit einem Extraktionslösungsmittel, ausgewählt aus der Gruppe bestehend aus Wasser, Methanol, Ethanol, Ethylacetat und Kombinationen davon, bevorzugt ausgewählt aus der Gruppe bestehend aus Wasser, Ethanol oder Ethylacetat, bevorzugt bei einer Temperatur zwischen 15 und 70°C, bevorzugt für einen Zeitraum zwischen 30 und 90 Minuten, bevorzugt unter Verwendung von 1 - 20 Litern Extraktionslösungsmittel pro kg Zichorienpflanzenmaterial;
c) Abtrennen des Extraktionslösungsmittels, das gelöste Sesquiterpenlaktone enthält, von dem teilchenförmigen Pflanzenmaterial, was zu einem Zichorienextrakt führt; und
d) optional Unterziehen des in Schritt c) erhaltenen Zichorienextrakts einem oder mehreren weiteren Schritten, die zu seiner weiteren Reinigung und/oder Konzentration führen,
als Fungizid auf Kulturpflanzen gegen Pilzpathogene der Gattung *Stemphylium,* bevorzugt *Stemphylium beticola* sp, und/oder als Fungizid auf Kulturpflanzen gegen Pilzpathogene der Gattung *Cercospora,* bevorzugt *Cercospora beticola* sp.

2. Verwendung eines Zichorienextrakts nach Anspruch 1, erhältlich durch ein Verfahren nach Anspruch 1, wobei das Verfahren die aufeinanderfolgenden Schritte umfasst:
a) Bereitstellen eines Zichorienpflanzenmaterials;
b) in Kontakt bringen des Zichorienpflanzenmaterials mit einem Extraktionslösungsmittel, ausgewählt aus der Gruppe bestehend aus Wasser, Methanol, Ethanol, Ethylacetat und Kombinationen davon, bevorzugt ausgewählt aus der Gruppe bestehend aus Wasser, Ethanol oder Ethylacetat, bevorzugt bei einer Temperatur zwischen 15 und 70°C, bevorzugt für einen Zeitraum zwischen 30 und 90 Minuten, bevorzugt unter Verwendung von 1 - 20 Litern Extraktionslösungsmittel pro kg Zichorienpflanzenmaterial;
c) Abtrennen des Extraktionslösungsmittels, das gelöste Sesquiterpenlaktone enthält, von dem teilchenförmigen Pflanzenmaterial, was zu einem Zichorienextrakt führt; und
d) Unterziehen des in Schritt c) erhaltenen Zichorienextrakts einem oder mehreren Filtrationsschritten und einem Konzentrationsschritt, um einen Zichorienextrakt mit einem Trockenstoffgehalt von 5 Gew.-% oder mehr, bevorzugt einem Trockenstoffgehalt von 10 Gew.-% oder mehr, bezogen auf das Gesamtgewicht des Zichorienextrakts, zu erhalten.

3. Verwendung einer fungiziden Formulierung, die durch ein Verfahren erhältlich ist, das die aufeinanderfolgenden Schritte umfasst:
a) Bereitstellen eines Zichorienpflanzenmaterials;
b) In Kontakt bringen des Zichorienpflanzenmaterials mit einem Extraktionslösungsmittel, ausgewählt aus der Gruppe bestehend aus Wasser, Methanol, Ethanol, Ethylacetat und Kombinationen davon, bevorzugt ausgewählt aus der Gruppe bestehend aus Wasser, Ethanol oder Ethylacetat, bevorzugt bei einer Temperatur zwischen 15 und 70°C, bevorzugt für einen Zeitraum zwischen 30 und 90 Minuten, bevorzugt unter Verwendung von 1 - 20 Litern Extraktionslösungsmittel pro kg Zichorienpflanzenmaterials;
c) Abtrennen des Extraktionslösungsmittels, das gelöste Sesquiterpenlaktone enthält, von dem teilchenförmigen Pflanzenmaterial, was zu einem Zichorienextrakt führt;
d) optional Unterziehen des in Schritt c) erhaltenen Zichorienextrakts einem oder mehreren weiteren Schritten, die zu seiner weiteren Reinigung und/oder Konzentration führen; und
e) Verdünnen des in Schritt c) oder d) erhaltenen Zichorienextrakts mit einer Trägerflüssigkeit, wobei optional vor oder nach der Verdünnung ein oder mehrere Hilfsmittel oder Additive zugesetzt werden,
wobei die Trägerflüssigkeit bevorzugt aus der Gruppe ausgewählt ist, die aus Wasser und Mischungen von Wasser mit einem Co-Lösungsmittel wie Methanol oder Ethanol besteht, wobei die Trägerflüssigkeit bevorzugt Wasser ist,
wobei das eine oder die mehreren Hilfsmittel oder Additive bevorzugt ausgewählt sind aus der Gruppe bestehend aus Tensiden, Netzmitteln, Verdickungsmitteln, Spreitmitteln, Klebern, Emulgatoren, Ölen, modifizierten Zuckern, Entschäumern, Organosilikaten, Puffermitteln, Konservierungsmitteln, Kompatibilitätsmitteln, Pflanzennährstoffen, Biosupplementen, Düngemitteln, pestiziden Mitteln und wachstumsfördernden Mitteln,
als Fungizid auf Kulturpflanzen gegen Pilzpathogene der Gattung *Stemphylium,* bevorzugt *Stemphylium beticola* sp, und/oder als Fungizid auf Kulturpflanzen gegen Pilzpathogene der Gattung *Cercospora,* bevorzugt *Cercospora beticola* sp.

4. Verwendung einer fungiziden Formulierung nach Anspruch 3, erhältlich durch ein Verfahren nach Anspruch 3, wobei das Verfahren die aufeinanderfolgenden Schritte umfasst:
a) Bereitstellen eines Zichorienpflanzenmaterials;
b) in Kontakt bringen des Zichorienpflanzenmaterials mit einem Extraktionslösungsmittel, ausgewählt aus der Gruppe bestehend aus Wasser, Methanol, Ethanol, Ethylacetat und Kombinationen davon, bevorzugt ausgewählt aus der Gruppe bestehend aus Wasser, Ethanol oder Ethylacetat, bevorzugt bei einer Temperatur zwischen 15 und 70°C, bevorzugt für einen Zeitraum zwischen 30 und 90 Minuten, bevorzugt unter Verwendung von 1 - 20 Litern Extraktionslösungsmittel pro kg Zichorienpflanzenmaterial;
c) Abtrennen des Extraktionslösungsmittels, das gelöste Sesquiterpenlaktone enthält, von dem teilchenförmigen Pflanzenmaterial, was zu einem Zichorienextrakt führt;
d) Unterziehen des in Schritt c) erhaltenen Zichorienextrakts einem oder mehreren Filtrationsschritten und einem Konzentrationsschritt, um einen Zichorienextrakt mit einem Trockenstoffgehalt von 5 Gew.-% oder mehr, bevorzugt einem Trockenstoffgehalt von 10 Gew.-% oder mehr, bezogen auf das Gesamtgewicht des Zichorienextrakts, zu erhalten; und
e) Verdünnen des in Schritt d) erhaltenen Zichorienextrakts mit einer Trägerflüssigkeit, wobei vor oder nach der Verdünnung optional ein oder mehrere Hilfsmittel oder Additive zugesetzt werden,
wobei die Trägerflüssigkeit bevorzugt aus der Gruppe ausgewählt ist, die aus Wasser und Mischungen von Wasser mit einem Co-Lösungsmittel wie Methanol oder Ethanol besteht, wobei die Trägerflüssigkeit bevorzugt Wasser ist,
wobei das eine oder die mehreren Hilfsmittel oder Additive bevorzugt ausgewählt sind aus der Gruppe bestehend aus Tensiden, Netzmitteln, Verdickungsmitteln, Spreitmitteln, Klebern, Emulgatoren, Ölen, modifizierten Zuckern, Entschäumern, Organosilikaten, Puffermitteln, Konservierungsmitteln, Kompatibilitätsmitteln, Pflanzennährstoffen, Biosupplementen, Düngemitteln, pestiziden Mitteln und wachstumsfördernden Mitteln.

5. Verfahren zur Vorbeugung und/oder Steuerung von Pilzbefall von Kulturpflanzen mit Krankheitserregern der Gattung *Stemphylium,* bevorzugt *Stemphylium beticola* sp, und/oder zur Vorbeugung und/oder Steuerung von Pilzbefall von Kulturpflanzen mit Krankheitserregern der Gattung *Cercospora,* bevorzugt *Cercospora beticola* sp, wobei das Verfahren die Behandlung der Kulturpflanzen mit einem Extrakt umfasst, der durch ein Verfahren erhältlich ist, das die aufeinanderfolgenden Schritte umfasst:
a) Bereitstellen eines Zichorienpflanzenmaterials;
b) in Kontakt bringen des Zichorienpflanzenmaterials mit einem Extraktionslösungsmittel, ausgewählt aus der Gruppe bestehend aus Wasser, Methanol, Ethanol, Ethylacetat und Kombinationen davon, bevorzugt ausgewählt aus der Gruppe bestehend aus Wasser, Ethanol oder Ethylacetat, bevorzugt bei einer Temperatur zwischen 15 und 70°C, bevorzugt für einen Zeitraum zwischen 30 und 90 Minuten, bevorzugt unter Verwendung von 1 - 20 Litern Extraktionslösungsmittel pro kg Zichorienpflanzenmaterial;
c) Abtrennen des Extraktionslösungsmittels, das gelöste Sesquiterpenlaktone enthält, von dem teilchenförmigen Pflanzenmaterial, was zu einem Zichorienextrakt führt; und
d) optional Unterziehen des in Schritt c) erhaltenen Zichorienextrakts einem oder mehreren weiteren Schritten, die zu seiner weiteren Reinigung und/oder Konzentration führen.

6. Verfahren nach Anspruch 5, wobei der Extrakt durch ein Verfahren erhältlich ist, das die aufeinanderfolgenden Schritte umfasst:
a) Bereitstellen eines Zichorienpflanzenmaterials;
b) in Kontakt bringen des Zichorienpflanzenmaterials mit einem Extraktionslösungsmittel, ausgewählt aus der Gruppe bestehend aus Wasser, Methanol, Ethanol, Ethylacetat und Kombinationen davon, bevorzugt ausgewählt aus der Gruppe bestehend aus Wasser, Ethanol oder Ethylacetat, bevorzugt bei einer Temperatur zwischen 15 und 70°C, bevorzugt für einen Zeitraum zwischen 30 und 90 Minuten, bevorzugt unter Verwendung von 1 - 20 Litern Extraktionslösungsmittel pro kg Zichorienpflanzenmaterial;
c) Abtrennen des Extraktionslösungsmittels, das gelöste Sesquiterpenlaktone enthält, von dem teilchenförmigen Pflanzenmaterial, was zu einem Zichorienextrakt führt; und
d) Unterziehen des in Schritt c) erhaltenen Zichorienextrakts einem oder mehreren Filtrationsschritten und einem Konzentrationsschritt, um einen Zichorienextrakt mit einem Trockenstoffgehalt von 5 Gew.-% oder mehr, bevorzugt einem Trockenstoffgehalt von 10 Gew.-% oder mehr, bezogen auf das Gesamtgewicht des Zichorienextrakts, zu erhalten.

7. Verfahren zur Vorbeugung und/oder Steuerung von Pilzbefall von Kulturpflanzen mit Krankheitserregern der Gattung *Stemphylium,* bevorzugt *Stemphylium beticola* sp., und/oder zur Vorbeugung und/oder Bekämpfung von Pilzbefall von Kulturpflanzen mit Krankheitserregern der Gattung *Cercospora,* bevorzugt *Cercospora beticola* sp., wobei das Verfahren die Behandlung der Kulturpflanzen mit einer fungiziden Formulierung umfasst, die durch ein Verfahren erhältlich ist, das die folgenden aufeinanderfolgenden Schritte umfasst
a) Bereitstellen eines Zichorienpflanzenmaterials;
b) in Kontakt bringen des Zichorienpflanzenmaterials mit einem Extraktionslösungsmittel, ausgewählt aus der Gruppe bestehend aus Wasser, Methanol, Ethanol, Ethylacetat und Kombinationen davon, bevorzugt ausgewählt aus der Gruppe bestehend aus Wasser, Ethanol oder Ethylacetat, bevorzugt bei einer Temperatur zwischen 15 und 70°C, bevorzugt für einen Zeitraum zwischen 30 und 90 Minuten, bevorzugt unter Verwendung von 1 - 20 Litern Extraktionslösungsmittel pro kg Zichorienpflanzenmaterial;
c) Abtrennen des Extraktionslösungsmittels, das gelöste Sesquiterpenlaktone enthält, von dem teilchenförmigen Pflanzenmaterial, was zu einem Zichorienextrakt führt;
d) optional Unterziehen des in Schritt c) erhaltenen Zichorienextrakts einem oder mehreren weiteren Schritten, die zu seiner weiteren Reinigung und/oder Konzentration führen; und
e) Verdünnen des in Schritt c) oder d) erhaltenen Zichorienextrakts mit einer Trägerflüssigkeit, wobei vor oder nach der Verdünnung optional ein oder mehrere Hilfsmittel oder Additive zugesetzt werden,
wobei die Trägerflüssigkeit bevorzugt aus der Gruppe ausgewählt ist, die aus Wasser und Mischungen von Wasser mit einem Co-Lösungsmittel wie Methanol oder Ethanol besteht, wobei die Trägerflüssigkeit bevorzugt Wasser ist,
wobei das eine oder die mehreren Hilfsmittel oder Additive bevorzugt ausgewählt sind aus der Gruppe bestehend aus Tensiden, Netzmitteln, Verdickungsmitteln, Spreitmitteln, Klebern, Emulgatoren, Ölen, modifizierten Zuckern, Entschäumern, Organosilikaten, Puffermitteln, Konservierungsmitteln, Kompatibilitätsmitteln, Pflanzennährstoffen, Biosupplementen, Düngemitteln, pestiziden Mitteln und wachstumsfördernden Mitteln.

8. Verfahren nach Anspruch 7, wobei die fungizide Formulierung durch ein Verfahren erhältlich ist, das die folgenden aufeinanderfolgenden Schritte umfasst
a) Bereitstellen eines Zichorienpflanzenmaterials;
b) in Kontakt bringen des Zichorienpflanzenmaterials mit einem Extraktionslösungsmittel, ausgewählt aus der Gruppe bestehend aus Wasser, Methanol, Ethanol, Ethylacetat und Kombinationen davon, bevorzugt ausgewählt aus der Gruppe bestehend aus Wasser, Ethanol oder Ethylacetat, bevorzugt bei einer Temperatur zwischen 15 und 70°C, bevorzugt für einen Zeitraum zwischen 30 und 90 Minuten, bevorzugt unter Verwendung von 1 - 20 Litern Extraktionslösungsmittel pro kg Zichorienpflanzenmaterial;
c) Abtrennen des Extraktionslösungsmittels, das gelöste Sesquiterpenlaktone enthält, von dem teilchenförmigen Pflanzenmaterial, was zu einem Zichorienextrakt führt;
d) Unterziehen des in Schritt c) erhaltenen Zichorienextrakts einem oder mehreren Filtrationsschritten und einem Konzentrationsschritt, um einen Zichorienextrakt mit einem Trockenstoffgehalt von 5 Gew.-% oder mehr, bevorzugt einem Trockenstoffgehalt von 10 Gew.-% oder mehr, bezogen auf das Gesamtgewicht des Zichorienextrakts, zu erhalten; und
e) Verdünnen des in Schritt c) erhaltenen Zichorienextrakts mit einer Trägerflüssigkeit, wobei vor oder nach der Verdünnung optional ein oder mehrere Hilfsmittel oder Additive zugesetzt werden,
wobei die Trägerflüssigkeit bevorzugt aus der Gruppe ausgewählt ist, die aus Wasser und Mischungen von Wasser mit einem Co-Lösungsmittel wie Methanol oder Ethanol besteht, wobei die Trägerflüssigkeit bevorzugt Wasser ist,
wobei das eine oder die mehreren Hilfsmittel oder Additive bevorzugt ausgewählt sind aus der Gruppe bestehend aus Tensiden, Netzmitteln, Verdickungsmitteln, Spreitmitteln, Klebern, Emulgatoren, Ölen, modifizierten Zuckern, Entschäumern, Organosilikaten, Puffermitteln, Konservierungsmitteln, Kompatibilitätsmitteln, Pflanzennährstoffen, Biosupplementen, Düngemitteln, pestiziden Mitteln und wachstumsfördernden Mitteln.

9. Verwendung eines Zichorienextrakts oder einer fungiziden Formulierung nach einem der Ansprüche 1 bis 4 oder eines Verfahrens nach einem der Ansprüche 5 bis 8, wobei der Zichorienextrakt oder die fungizide Formulierung umfasst:
• 5-25 Gew.-% Lactucin, optional in Form eines Esters;
• 1-70 Gew.-% 11,13-Dihydrolactucin, optional in Form eines Esters;
• 1-15 Gew.-% 8-Deoxylactucin, optional in Form eines Esters;
• 0,5-20 Gew.-% 11,13-Dihydro-8-deoxylactucin, optional in Form eines Esters;
• 1-40 Gew.-% Lactucopicrin, optional in Form eines Esters; und
• 1-60 Gew.-% 11,13-Dihydrolactucopicrin, optional in Form eines Esters;
wobei sich die Gewichtsprozente auf die Gesamtmenge der Sesquiterpenlactone im Zichorienextrakt oder in der fungiziden Formulierung beziehen.

10. Verwendung eines Zichorienextrakts oder einer fungiziden Formulierung nach einem der Ansprüche 1 bis 4 oder eines Verfahrens nach einem der Ansprüche 5 bis 8, wobei der Zichorienextrakt oder die fungizide Formulierung umfasst:
• 5-40 Gew.-% Lactucin, optional in Form eines Esters;
• 1-15 Gew.-% 11,13-Dihydrolactucin, optional in Form eines Esters;
• 5-25 Gew.-% 8-Deoxylactucin, optional in Form eines Esters;
• 0,5-10 Gew.-% 11,13-Dihydro-8-deoxylactucin, optional in Form eines Esters;
• 5-35 Gew.-% Lactucopicrin, optional in Form eines Esters; und
• 15-50 Gew.-% 11,13-Dihydrolactucopicrin, optional in Form eines Esters;
wobei sich die Gewichtsprozente auf die Gesamtmenge der Sesquiterpenlactone im Zichorienextrakt oder in der fungiziden Formulierung beziehen.

11. Verwendung eines Zichorienextrakts oder einer fungiziden Formulierung nach einem der Ansprüche 1 bis 4 oder eines Verfahrens nach einem der Ansprüche 5 bis 8, wobei der Zichorienextrakt oder die fungizide Formulierung umfasst:
• 1-15 Gew.-% Lactucin, optional in Form eines Esters;
• 0,5-10 Gew.-% 11,13-Dihydrolactucin, optional in Form eines Esters;
• 5-20 Gew.-% 8-Deoxylactucin, optional in Form eines Esters;
• 0,05-5 Gew.-% 11,13-Dihydro-8-deoxylactucin, optional in Form eines Esters;
• 20-40 Gew.-% Lactucopicrin, optional in Form eines Esters; und
• 35-70 Gew.-% 11,13-Dihydrolactucopikrin, optional in Form eines Esters;
wobei sich die Gewichtsprozente auf die Gesamtmenge der Sesquiterpenlactone im Zichorienextrakt oder in der fungiziden Formulierung beziehen.

12. Verwendung eines Zichorienextrakts oder einer fungiziden Formulierung nach einem der Ansprüche 1 bis 4 und 9 bis 11 oder eines Verfahrens nach einem der Ansprüche 5 bis 11, wobei das Zichorienpflanzenmaterial *Cichorium intybus* ist.

13. Verwendung eines Zichorienextrakts oder einer fungiziden Formulierung nach einem der Ansprüche 1 bis 4 und 9 bis 12 oder eines Verfahrens nach einem der Ansprüche 5 bis 12, wobei der Zichorienextrakt oder die fungizide Formulierung auf die Pflanzen in einer Menge aufgebracht wird, die zwischen 0,01 und 35 Gramm Sesquiterpenlactone pro Hektar bereitstellt, bevorzugter in einer Menge zwischen 0,02 und 10 Gramm Sesquiterpenlactone pro Hektar, noch bevorzugter in einer Menge zwischen 0,04 und 5 Gramm Sesquiterpenlactone pro Hektar, noch bevorzugter in einer Menge zwischen 0,06 und 4 Gramm Sesquiterpenlactone pro Hektar, am meisten bevorzugt in einer Menge zwischen 0,08 und 3 Gramm Sesquiterpenlactone pro Hektar, auf die Pflanzen aufgebracht wird.

14. Verwendung eines Zichorienextrakts oder einer fungiziden Formulierung nach einem der Ansprüche 1 bis 4 und 9 bis 13 oder eines Verfahrens nach einem der Ansprüche 5 bis 13, wobei die Kulturpflanze ausgewählt ist aus der Gruppe bestehend aus Zuckerrüben, Kartoffeln, Weizen, Rüben und Spinat, bevorzugt Zuckerrüben.

15. Verwendung eines Zichorienextrakts oder einer fungiziden Formulierung nach einem der Ansprüche 1 bis 4 und 9 bis 14 oder eines Verfahrens nach einem der Ansprüche 5 bis 14, wobei der Zichorienextrakt oder die fungizide Formulierung 1, 2, 3 oder 4 Mal pro Monat auf die Kulturpflanzen aufgebracht wird.

## Revendications

1. - Utilisation d'un extrait de chicorée susceptible d'être obtenu par un procédé comprenant les étapes consécutives consistant à :
a) se procurer un matériel végétal de chicorée ;
b) mettre en contact le matériel végétal de chicorée avec un solvant d'extraction choisi dans le groupe consistant en l'eau, le méthanol, l'éthanol, l'acétate d'éthyle et les combinaisons de ceux-ci, de préférence choisi dans le groupe consistant en l'eau, l'éthanol ou l'acétate d'éthyle, de préférence à une température entre 15 et 70 °C, de préférence pendant une période de temps entre 30 et 90 minutes, de préférence à l'aide de 1 à 20 litres de solvant d'extraction par kg de matériel végétal de chicorée ;
c) séparer le solvant d'extraction comprenant des lactones sesquiterpéniques dissoutes à partir du matériel végétal particulaire conduisant à un extrait de chicorée ; et
d) facultativement, soumettre l'extrait de chicorée obtenu à l'étape c) à une ou plusieurs étapes supplémentaires conduisant à une purification supplémentaire et/ou une concentration supplémentaire de celui-ci,
en tant que fongicide sur les cultures à l'encontre des pathogènes fongiques du genre *Stemphylium*, de préférence *Stemphylium beticola* sp, et/ou en tant que fongicide sur les cultures à l'encontre des pathogènes fongiques du genre *Cercospora,* de préférence *Cercospora beticola* sp.

2. - Utilisation d'un extrait de chicorée selon la revendication 1, susceptible d'être obtenu par un procédé selon la revendication 1, dans lequel ledit procédé comprend les étapes consécutives consistant à :
a) se procurer un matériel végétal de chicorée ;
b) mettre en contact le matériel végétal de chicorée avec un solvant d'extraction choisi dans le groupe consistant en l'eau, le méthanol, l'éthanol, l'acétate d'éthyle et les combinaisons de ceux-ci, de préférence choisi dans le groupe consistant en l'eau, l'éthanol ou l'acétate d'éthyle, de préférence à une température entre 15 et 70 °C, de préférence pendant une période de temps entre 30 et 90 minutes, de préférence à l'aide de 1 à 20 litres de solvant d'extraction par kg de matériel végétal de chicorée ;
c) séparer le solvant d'extraction comprenant des lactones sesquiterpéniques dissoutes à partir du matériel végétal particulaire conduisant à un extrait de chicorée ; et
d) soumettre l'extrait de chicorée obtenu à l'étape c) à une ou plusieurs étapes de filtration et à une étape de concentration pour obtenir un extrait de chicorée ayant une teneur en matières solides sèches de 5 % en poids ou plus, sur la base du poids total de l'extrait de chicorée, de préférence une teneur en matières solides sèches de 10 % en poids ou plus.

3. - Utilisation d'une formulation fongicide susceptible d'être obtenue par un procédé comprenant les étapes consécutives consistant à :
a) se procurer un matériel végétal de chicorée ;
b) mettre en contact le matériel végétal de chicorée avec un solvant d'extraction choisi dans le groupe consistant en l'eau, le méthanol, l'éthanol, l'acétate d'éthyle et les combinaisons de ceux-ci, de préférence choisi dans le groupe consistant en l'eau, l'éthanol ou l'acétate d'éthyle, de préférence à une température entre 15 et 70 °C, de préférence pendant une période de temps entre 30 et 90 minutes, de préférence à l'aide de 1 à 20 litres de solvant d'extraction par kg de matériel végétal de chicorée ;
c) séparer le solvant d'extraction comprenant des lactones sesquiterpéniques dissoutes à partir du matériel végétal particulaire conduisant à un extrait de chicorée ; et
d) facultativement, soumettre l'extrait de chicorée obtenu à l'étape c) à une ou plusieurs étapes supplémentaires conduisant à une purification supplémentaire et/ou une concentration supplémentaire de celui-ci ; et
e) diluer l'extrait de chicorée obtenu à l'étape c) ou d) avec un liquide support, un ou plusieurs adjuvants ou additifs étant facultativement ajoutés avant ou après la dilution, le liquide support étant de préférence choisi dans le groupe consistant en l'eau et les mélanges d'eau avec un co-solvant tel que le méthanol ou l'éthanol, le liquide support étant de préférence l'eau,
le ou les adjuvants ou additifs étant de préférence choisis dans le groupe consistant en les tensio-actifs, les agents mouillants, les épaississants, les agents d'étalement, les adhésifs, les émulsifiants, les huiles, les sucres modifiés, les agents antimousse, les organosilicates, les agents tampons, les conservateurs, les agents de compatibilité, les nutriments pour plantes, les biosuppléments, les engrais, les agents pesticides et les agents améliorant la croissance,
en tant que fongicide sur les cultures à l'encontre des pathogènes fongiques du genre *Stemphylium*, de préférence *Stemphylium beticola* sp, et/ou en tant que fongicide sur les cultures à l'encontre des pathogènes fongiques du genre *Cercospora,* de préférence *Cercospora beticola* sp.

4. - Utilisation d'une formulation fongicide selon la revendication 3, susceptible d'être obtenue par un procédé selon la revendication 3, dans lequel ledit procédé comprend les étapes consécutives consistant à :
a) se procurer un matériel végétal de chicorée ;
b) mettre en contact le matériel végétal de chicorée avec un solvant d'extraction choisi dans le groupe consistant en l'eau, le méthanol, l'éthanol, l'acétate d'éthyle et les combinaisons de ceux-ci, de préférence choisi dans le groupe consistant en l'eau, l'éthanol ou l'acétate d'éthyle, de préférence à une température entre 15 et 70 °C, de préférence pendant une période de temps entre 30 et 90 minutes, de préférence à l'aide de 1 à 20 litres de solvant d'extraction par kg de matériel végétal de chicorée ;
c) séparer le solvant d'extraction comprenant des lactones sesquiterpéniques dissoutes à partir du matériel végétal particulaire conduisant à un extrait de chicorée ;
d) soumettre l'extrait de chicorée obtenu à l'étape c) à une ou plusieurs étapes de filtration et à une étape de concentration pour obtenir un extrait de chicorée ayant une teneur en matières solides sèches de 5 % en poids ou plus, sur la base du poids total de l'extrait de chicorée, de préférence une teneur en matières solides sèches de 10 % en poids ou plus ; et
e) diluer l'extrait de chicorée obtenu à l'étape d) avec un liquide support, un ou plusieurs adjuvants ou additifs étant facultativement ajoutés avant ou après la dilution,
le liquide support étant de préférence choisi dans le groupe consistant en l'eau et les mélanges d'eau avec un co-solvant tel que le méthanol ou l'éthanol, le liquide support étant de préférence l'eau,
le ou les adjuvants ou additifs étant de préférence choisis dans le groupe consistant en les tensio-actifs, les agents mouillants, les épaississants, les agents d'étalement, les adhésifs, les émulsifiants, les huiles, les sucres modifiés, les agents antimousse, les organosilicates, les agents tampons, les conservateurs, les agents de compatibilité, les nutriments pour plantes, les biosuppléments, les engrais, les agents pesticides et les agents améliorant la croissance.

5. - Procédé pour prévenir et/ou lutter contre l'infestation fongique de cultures par des pathogènes du genre *Stemphylium,* de préférence *Stemphylium beticola* sp, et/ou pour prévenir et/ou lutter contre l'infestation fongique de cultures par des pathogènes du genre *Cercospora,* de préférence *Cercospora beticola* sp., ledit procédé comprenant le traitement des cultures par un extrait susceptible d'être obtenu par un procédé comprenant les étapes consécutives consistant à :
a) se procurer un matériel végétal de chicorée ;
b) mettre en contact le matériel végétal de chicorée avec un solvant d'extraction choisi dans le groupe consistant en l'eau, le méthanol, l'éthanol, l'acétate d'éthyle et les combinaisons de ceux-ci, de préférence choisi dans le groupe consistant en l'eau, l'éthanol ou l'acétate d'éthyle, de préférence à une température entre 15 et 70 °C, de préférence pendant une période de temps entre 30 et 90 minutes, de préférence à l'aide de 1 à 20 litres de solvant d'extraction par kg de matériel végétal de chicorée ;
c) séparer le solvant d'extraction comprenant des lactones sesquiterpéniques dissoutes à partir du matériel végétal particulaire conduisant à un extrait de chicorée ; et
d) facultativement, soumettre l'extrait de chicorée obtenu à l'étape c) à une ou plusieurs étapes supplémentaires conduisant à une purification supplémentaire et/ou une concentration supplémentaire de celui-ci.

6. - Procédé selon la revendication 5, dans lequel l'extrait est susceptible d'être obtenu par un procédé comprenant les étapes consécutives consistant à :
a) se procurer un matériel végétal de chicorée ;
b) mettre en contact le matériel végétal de chicorée avec un solvant d'extraction choisi dans le groupe consistant en l'eau, le méthanol, l'éthanol, l'acétate d'éthyle et les combinaisons de ceux-ci, de préférence choisi dans le groupe consistant en l'eau, l'éthanol ou l'acétate d'éthyle, de préférence à une température entre 15 et 70 °C, de préférence pendant une période de temps entre 30 et 90 minutes, de préférence à l'aide de 1 à 20 litres de solvant d'extraction par kg de matériel végétal de chicorée ;
c) séparer le solvant d'extraction comprenant des lactones sesquiterpéniques dissoutes à partir du matériel végétal particulaire conduisant à un extrait de chicorée ; et
d) soumettre l'extrait de chicorée obtenu à l'étape c) à une ou plusieurs étapes de filtration et à une étape de concentration pour obtenir un extrait de chicorée ayant une teneur en matières solides sèches de 5 % en poids ou plus, sur la base du poids total de l'extrait de chicorée, de préférence une teneur en matières solides sèches de 10 % en poids ou plus.

7. - Procédé pour prévenir et/ou lutter contre l'infestation fongique de cultures par des pathogènes du genre *Stemphylium,* de préférence *Stemphylium beticola* sp, et/ou pour prévenir et/ou lutter contre l'infestation fongique de cultures par des pathogènes du genre *Cercospora,* de préférence *Cercospora beticola* sp., ledit procédé comprenant le traitement des cultures par une formulation fongicide susceptible d'être obtenue par un procédé comprenant les étapes consécutives consistant à :
a) se procurer un matériel végétal de chicorée ;
b) mettre en contact le matériel végétal de chicorée avec un solvant d'extraction choisi dans le groupe consistant en l'eau, le méthanol, l'éthanol, l'acétate d'éthyle et les combinaisons de ceux-ci, de préférence choisi dans le groupe consistant en l'eau, l'éthanol ou l'acétate d'éthyle, de préférence à une température entre 15 et 70 °C, de préférence pendant une période de temps entre 30 et 90 minutes, de préférence à l'aide de 1 à 20 litres de solvant d'extraction par kg de matériel végétal de chicorée ;
c) séparer le solvant d'extraction comprenant des lactones sesquiterpéniques dissoutes à partir du matériel végétal particulaire conduisant à un extrait de chicorée ;
d) facultativement, soumettre l'extrait de chicorée obtenu à l'étape c) à une ou plusieurs étapes supplémentaires conduisant à une purification supplémentaire et/ou à une concentration supplémentaire de celui-ci ; et
e) diluer l'extrait de chicorée obtenu à l'étape c) ou d) avec un liquide support, un ou plusieurs adjuvants ou additifs étant facultativement ajoutés avant ou après la dilution,
le liquide support étant de préférence choisi dans le groupe consistant en l'eau et les mélanges d'eau avec un co-solvant tel que le méthanol ou l'éthanol, le liquide support étant de préférence l'eau,
le ou les adjuvants ou additifs étant de préférence choisis dans le groupe consistant en les tensio-actifs, les agents mouillants, les épaississants, les agents d'étalement, les adhésifs, les émulsifiants, les huiles, les sucres modifiés, les agents antimousse, les organosilicates, les agents tampons, les conservateurs, les agents de compatibilité, les nutriments pour plantes, les biosuppléments, les engrais, les agents pesticides et les agents améliorant la croissance.

8. - Procédé selon la revendication 7, dans lequel la formulation fongicide est susceptible d'être obtenue par un procédé comprenant les étapes consécutives consistant à :
a) se procurer un matériel végétal de chicorée ;
b) mettre en contact le matériel végétal de chicorée avec un solvant d'extraction choisi dans le groupe consistant en l'eau, le méthanol, l'éthanol, l'acétate d'éthyle et les combinaisons de ceux-ci, de préférence choisi dans le groupe consistant en l'eau, l'éthanol ou l'acétate d'éthyle, de préférence à une température entre 15 et 70 °C, de préférence pendant une période de temps entre 30 et 90 minutes, de préférence à l'aide de 1 à 20 litres de solvant d'extraction par kg de matériel végétal de chicorée ;
c) séparer le solvant d'extraction comprenant des lactones sesquiterpéniques dissoutes à partir du matériel végétal particulaire conduisant à un extrait de chicorée ;
d) soumettre l'extrait de chicorée obtenu à l'étape c) à une ou plusieurs étapes de filtration et à une étape de concentration pour obtenir un extrait de chicorée ayant une teneur en matières solides sèches de 5 % en poids ou plus, sur la base du poids total de l'extrait de chicorée, de préférence une teneur en matières solides sèches de 10 % en poids ou plus ; et
e) diluer l'extrait de chicorée obtenu à l'étape c) avec un liquide support, un ou plusieurs adjuvants ou additifs étant facultativement ajoutés avant ou après la dilution, le liquide support étant de préférence choisi dans le groupe consistant en l'eau et les mélanges d'eau avec un co-solvant tel que le méthanol ou l'éthanol, le liquide support étant de préférence l'eau,
le ou les adjuvants ou additifs étant de préférence choisis dans le groupe consistant en les tensio-actifs, les agents mouillants, les épaississants, les agents d'étalement, les adhésifs, les émulsifiants, les huiles, les sucres modifiés, les agents antimousse, les organosilicates, les agents tampons, les conservateurs, les agents de compatibilité, les nutriments pour plantes, les biosuppléments, les engrais, les agents pesticides et les agents améliorant la croissance.

9. - Utilisation d'un extrait de chicorée ou d'une formulation fongicide selon l'une quelconque des revendications 1 à 4 ou procédé selon l'une quelconque des revendications 5 à 8, dans laquelle/dans lequel l'extrait de chicorée ou la formulation fongicide comprend :
▪ 5 à 25 % en poids de lactucine, facultativement sous la forme d'un ester ;
▪ 1 à 70 % en poids de 11,13-dihydrolactucine, facultativement sous la forme d'un ester;
▪ 1 à 15 % en poids de 8-désoxylactucine, facultativement sous la forme d'un ester ;
▪ 0,5 à 20 % en poids de 11,13-dihydro-8-désoxylactucine, facultativement sous la forme d'un ester ;
▪ 1 à 40 % en poids de lactucopicrine, facultativement sous la forme d'un ester ; et
▪ 1 à 60 % en poids de 11,13-dihydrolactucopicrine, facultativement sous la forme d'un ester,
les pourcentages en poids étant basés sur la quantité totale de lactones sesquiterpéniques dans l'extrait de chicorée ou la formulation fongicide.

10. - Utilisation d'un extrait de chicorée ou d'une formulation fongicide selon l'une quelconque des revendications 1 à 4, ou procédé selon l'une quelconque des revendications 5 à 8, dans laquelle/dans lequel l'extrait de chicorée ou la formulation fongicide comprend :
▪ 5 à 40 % en poids de lactucine, facultativement sous la forme d'un ester ;
▪ 1 à 15 % en poids de 11,13-dihydrolactucine, facultativement sous la forme d'un ester ;
▪ 5 à 25 % en poids de 8-désoxylactucine, facultativement sous la forme d'un ester ;
▪ 0,5 à 10% en poids de la 11,13-dihydro-8-désoxylactucine, facultativement sous la forme d'un ester ;
▪ 5 à 35 % en poids de lactucopicrine, facultativement sous la forme d'un ester ; et
▪ 15 à 50 % en poids de 11,13-dihydrolactucopicrine, facultativement sous la forme d'un ester,
les pourcentages en poids étant basés sur la quantité totale de lactones sesquiterpéniques dans l'extrait de chicorée ou la formulation fongicide.

11. - Utilisation d'un extrait de chicorée ou d'une formulation fongicide selon l'une quelconque des revendications 1 à 4, ou procédé selon l'une quelconque des revendications 5 à 8, dans laquelle/dans lequel l'extrait de chicorée ou la formulation fongicide comprend :
▪ 1 à 15 % en poids de lactucine, facultativement sous la forme d'un ester ;
▪ 0,5 à 10 % en poids de 11,13-dihydrolactucine, facultativement sous la forme d'un ester ;
▪ 5 à 20 % en poids de 8-désoxylactucine, facultativement sous la forme d'un ester ;
▪ 0,05 à 5 % en poids de 11,13-dihydro-8-désoxylactucine, facultativement sous la forme d'un ester ;
▪ 20 à 40 % en poids de lactucopicrine, facultativement sous la forme d'un ester ; et
▪ 35 à 70 % en poids de 11,13-dihydrolactucopicrine, facultativement sous la forme d'un ester,
les pourcentages en poids étant basés sur la quantité totale de lactones sesquiterpéniques dans l'extrait de chicorée ou la formulation fongicide.

12. - Utilisation d'un extrait de chicorée ou d'une formulation fongicide selon l'une quelconque des revendications 1 à 4 et 9 à 11, ou procédé selon l'une quelconque des revendications 5 à 11, dans laquelle/dans lequel le matériel végétal de chicorée est *Cichorium intybus.*

13. - Utilisation d'un extrait de chicorée ou d'une formulation fongicide selon l'une quelconque des revendications 1 à 4 et 9 à 12, ou procédé selon l'une quelconque des revendications 5 à 12, dans laquelle/dans lequel l'extrait de chicorée ou la formulation fongicide est appliqué(e) sur les cultures dans une quantité fournissant entre 0,01 et 35 grammes de lactones sesquiterpéniques par hectare, de façon davantage préférée dans une quantité d'entre 0,02 et 10 grammes de lactones sesquiterpéniques par hectare, de façon davantage préférée dans une quantité d'entre 0,04 et 5 grammes de lactones sesquiterpéniques par hectare, de façon davantage préférée dans une quantité d'entre 0,06 et 4 grammes de lactones sesquiterpéniques par hectare, de la façon que l'on préfère le plus dans une quantité d'entre 0,08 et 3 grammes de lactones sesquiterpéniques par hectare.

14. - Utilisation d'un extrait de chicorée ou d'une formulation fongicide selon l'une quelconque des revendications 1 à 4 et 9 à 13, ou procédé selon l'une quelconque des revendications 5 à 13, dans laquelle/dans lequel la culture est choisie dans le groupe consistant en la betterave sucrière, la pomme de terre, le blé, la racine de betterave et l'épinard, de préférence la betterave sucrière.

15. - Utilisation d'un extrait de chicorée ou d'une formulation fongicide selon l'une quelconque des revendications 1 à 4 et 9 à 14, ou procédé selon l'une quelconque des revendications 5 à 14, dans laquelle/dans lequel l'extrait de chicorée ou la formulation fongicide est appliqué (e) sur les cultures 1, 2, 3 ou 4 fois par mois.
